(19)

Europäisches
Patentamt
European
Patent Office
Office européen
des brevets

(11)  EP 4 668 955 A2

(12)  **EUROPEAN PATENT APPLICATION**
published in accordance with Art. 153(4) EPC

(43)  Date of publication:
　　　 **24.12.2025  Bulletin 2025/52**

(21)  Application number: **24785251.0**

(22)  Date of filing: **04.04.2024**

(51)  International Patent Classification (IPC):
　　　 *H04W 72/115* (2023.01)　　 *H04W 72/11* (2023.01)
　　　 *H04L 1/18* (2023.01)　　　 *H04W 72/232* (2023.01)

(52)  Cooperative Patent Classification (CPC):
　　　 H04L 1/18; H04W 72/11; H04W 72/115;
　　　 H04W 72/232

(86)  International application number:
　　　 **PCT/KR2024/004397**

(87)  International publication number:
　　　 **WO 2024/210551 (10.10.2024 Gazette 2024/41)**

(84)  Designated Contracting States:
　　　 **AL AT BE BG CH CY CZ DE DK EE ES FI FR GB
　　　 GR HR HU IE IS IT LI LT LU LV MC ME MK MT NL
　　　 NO PL PT RO RS SE SI SK SM TR**
　　　 Designated Extension States:
　　　 **BA**
　　　 Designated Validation States:
　　　 **GE KH MA MD TN**

(30)  Priority:  **05.04.2023  KR 20230044493**

(71)  Applicant: **Samsung Electronics Co., Ltd.
　　　 Suwon-si, Gyeonggi-do 16677 (KR)**

(72)  Inventors:
　　　 • **PARK, Sungjin**
　　　　 **Suwon-si, Gyeonggi-do 16677 (KR)**
　　　 • **RYU, Hyunsuk**
　　　　 **Suwon-si, Gyeonggi-do 16677 (KR)**
　　　 • **YANG, Hyewon**
　　　　 **Suwon-si, Gyeonggi-do 16677 (KR)**
　　　 • **LEE, Jaewon**
　　　　 **Suwon-si, Gyeonggi-do 16677 (KR)**

(74)  Representative: **Gulde & Partner
　　　 Patent- und Rechtsanwaltskanzlei mbB
　　　 Berliner Freiheit 2
　　　 10785 Berlin (DE)**

(54)  **METHOD AND APPARATUS FOR TRANSMITTING AND RECEIVING PERIODIC DATA BY USING UNUSED INFORMATION IN WIRELESS COMMUNICATION SYSTEM**

(57)  The present disclosure relates to a 5G or 6G communication system for supporting a higher data transmission rate. A method for a user equipment in a communication system, according to an embodiment of the present disclosure, may comprise the steps of: receiving, from a base station, configuration information related to an uplink (UL) configured grant (CG); identifying a plurality of CG-physical uplink shared channels (PUSCHs) on the basis of the configuration information; determining whether or not to transmit each of the plurality of CG-PUSCHs; and transmitting, to the base station, uplink control information (UCI) including information indicating whether or not to transmit each of the plurality of CG-PUSCHs.

FIG. 1

EP 4 668 955 A2

## Description

### [Technical Field]

The disclosure relates to a grant-free data transmission method in a wireless communication system. Specifically, the disclosure relates to a data transmission method utilizing unused information of grant-free data resources.

### [Background Art]

Fifth generation (5G) mobile communication technology defines a wide frequency band to enable fast transmission speed and new services, and can be implemented not only in a sub-6 GHz frequency band ("sub 6 GHz") such as 3.5 GHz but also in an ultra-high frequency band ("above 6 GHz") called mmWave such as 28 GHz or 39 GHz. In addition, 6G mobile communication technology called "beyond 5G system" is being considered for implementation in a terahertz (THz) band (e.g., band of 95 GHz to 3 THz) to achieve transmission speed that is 50 times faster and ultra-low latency that is reduced to 1/10 compared with 5G mobile communication technology.

In the early days of 5G mobile communication technology, to meet service support and performance requirements for enhanced mobile broadband (eMBB), ultra-reliable and low-latency communication (URLLC), and massive machine-type communications (mMTC), standardization has been carried out regarding beamforming for mitigating the pathloss of radio waves and increasing the propagation distance thereof in the mmWave band, massive MIMO, support of various numerology for efficient use of ultra-high frequency resources (e.g., operating multiple subcarrier spacings), dynamic operations on slot formats, initial access schemes to support multi-beam transmission and broadband, definition and operation of bandwidth parts (BWP), new channel coding schemes such as low density parity check (LDPC) codes for large-capacity data transmission and polar codes for reliable transmission of control information, L2 pre-processing, and network slicing for providing a dedicated network specialized for a specific service.

Currently, discussions are underway to improve 5G mobile communication technology and enhance performance thereof in consideration of the services that the 5G mobile communication technology has initially intended to support, and physical layer standardization is in progress for technologies such as V2X (Vehicle-to-Everything) that aims to help a self-driving vehicle to make driving decisions based on its own location and status information transmitted by vehicles and to increase user convenience, new radio unlicensed (NR-U) for the purpose of system operation that meets various regulatory requirements in unlicensed bands, low power consumption scheme for NR terminals (UE power saving), non-terrestrial network (NTN) as direct terminal-satellite communication to secure coverage in an area where communication with a terrestrial network is not possible, and positioning.

In addition, standardization in radio interface architecture/protocol is in progress for technologies such as intelligent factories (industrial Internet of things, IIoT) for new service support through linkage and convergence with other industries, integrated access and backhaul (IAB) that provides nodes for network service area extension by integrating and supporting wireless backhaul links and access links, mobility enhancement including conditional handover and dual active protocol stack (DAPS) handover, 2-step random access (2-step RACH for NR) that simplifies the random access procedure; and standardization in system architecture/service is also in progress for the 5G baseline architecture (e.g., service based architecture, service based interface) for integrating network functions virtualization (NFV) and software defined networking (SDN) technologies, and mobile edge computing (MEC) where the terminal receives a service based on its position.

When such a 5G mobile communication system is commercialized, connected devices whose number is explosively increasing will be connected to the communication networks; accordingly, it is expected that enhancement in function and performance of the 5G mobile communication system and the integrated operation of the connected devices will be required. To this end, new research will be conducted regarding 5G performance improvement and complexity reduction, AI service support, metaverse service support, and drone communication by utilizing extended reality (XR) for efficiently supporting augmented reality (AR), virtual reality (VR), and mixed reality (MR), artificial intelligence (AI), and machine learning (ML).

Further, such advancement of 5G mobile communication systems will be the basis for the development of technologies such as new waveforms for ensuring coverage in the terahertz band of 6G mobile communication technology, full dimensional MIMO (FD-MIMO), multi-antenna transmission such as array antenna or large scale antenna, metamaterial-based lenses and antennas for improved coverage of terahertz band signals, high-dimensional spatial multiplexing using orbital angular momentum (OAM), reconfigurable intelligent surface (RIS) technique, full duplex technique to improve frequency efficiency and system network of 6G mobile communication technology, satellites, AI-based communication that utilizes artificial intelligence (AI) from the design stage and internalizes end-to-end AI support functions to realize system optimization, and next-generation distributed computing that realizes services whose complexity exceeds the limit of terminal computing capabilities by utilizing ultra-high-performance communication and computing resources.

5G communication systems are evolving to provide a variety of services, and as they provide a variety of services, methods for efficiently providing these services are required. Accordingly, research on grant-free communication is actively being conducted.

**[Disclosure of Invention]**

**[Technical Problem]**

The following disclosure describes embodiments for efficiently utilizing radio resources and performing grant-free data transmission and reception. In particular, a downlink grant-free data transmission and reception method and an uplink grant-free data transmission and reception method are described.

**[Solution to Problem]**

A method of a terminal in a communication system according to an embodiment of the disclosure may include: receiving configuration information related to an uplink (UL) configured grant (CG) from a base station; identifying plural CG physical uplink shared channels (PUSCHs) based on the configuration information; determining whether to transmit each of the plural CG PUSCHs; and transmitting uplink control information (UCI) including information indicating whether to transmit each of the plural CG PUSCHs to the base station.

A method of a base station in a communication system according to an embodiment of the disclosure may include: transmitting configuration information related to an uplink (UL) configured grant (CG) to a terminal; and receiving, from the terminal, uplink control information (UCI) including information indicating whether to transmit each of plural CG physical uplink shared channels (PUSCHs) based on the configuration information.

A terminal in a communication system according to an embodiment of the disclosure may include: a transceiver; and a controller that is configured to receive configuration information related to an uplink (UL) configured grant (CG) from a base station, identify plural CG physical uplink shared channels (PUSCHs) based on the configuration information, determine whether to transmit each of the plural CG PUSCHs, and transmit uplink control information (UCI) including information indicating whether to transmit each of the plural CG PUSCHs to the base station.

A base station in a communication system according to an embodiment of the disclosure may include: a transceiver; and a controller that is configured to transmit configuration information related to an uplink (UL) configured grant (CG) to a terminal, and receive, from the terminal, uplink control information (UCI) including information indicating whether to transmit each of plural CG physical uplink shared channels (PUSCHs) based on the configuration information.

**[Advantageous Effects of Invention]**

According to the disclosed embodiments, radio resources can be used efficiently, and various services can be efficiently provided to users according to priorities.

**[Brief Description of Drawings]**

FIG. 1 is a diagram illustrating a transmission structure in a time-frequency domain serving as radio resource regions for the 5G or NR system according to an embodiment of the disclosure.

FIG. 2 is a diagram illustrating an example of allocating eMBB data, URLLC data, and mMTC data in the time-frequency resource domain in the 5G or NR system according to an embodiment of the disclosure.

FIG. 3 is a diagram illustrating grant-free transmission and reception operations according to an embodiment of the disclosure.

FIG. 4 is a diagram illustrating a method for configuring a semi-static HARQ-ACK codebook in the NR system.

FIG. 5 is a diagram illustrating a method for configuring a dynamic HARQ-ACK codebook in the NR system.

FIG. 6 is a diagram illustrating a HARQ-ACK transmission process for DL SPS.

FIG. 7 is a diagram illustrating a process in which the UE transmits HARQ-ACK information based on a semi-static HARQ-ACK codebook for a DCI indicating SPS PDSCH deactivation.

FIG. 8 is a diagram illustrating a method for the UE to determine a dynamic HARQ-ACK codebook for SPS PDSCH reception.

FIG. 9 is a diagram illustrating a method for transmitting UL CG usage information according to an embodiment.

FIG. 10 is a diagram illustrating a situation in which CG PUSCH overlaps with PUCCH according to an embodiment.

FIG. 11 is a diagram illustrating a situation in which CG PUSCH overlaps with DG PUCCH according to an embodiment.

FIG. 12 is a diagram illustrating a situation in which PUCCH overlaps with multiple CG PUSCHs according to an embodiment.

FIG. 13 is a flowchart of UE operation in a situation where CG PUSCH overlaps with PUCCH according to an embodiment.

FIG. 14 is a block diagram illustrating the structure of a UE capable of carrying out embodiments of the disclosure.

FIG. 15 is a block diagram illustrating the structure of a base station capable of carrying out embodiments of the disclosure.

## [Mode for the Invention]

Hereinafter, embodiments will be described in detail with reference to the accompanying drawings.

In the following description of embodiments, descriptions of technical details well known in the art and not directly related to the disclosure may be omitted. This is to more clearly convey the subject matter of the disclosure without obscurities by omitting unnecessary descriptions.

Likewise, in the drawings, some elements are exaggerated, omitted, or only outlined in brief. Also, the size of each element does not necessarily reflect the actual size. The same or similar reference symbols are used throughout the drawings to refer to the same or like parts.

Advantages and features of the disclosure and methods for achieving them will be apparent from the following detailed description of embodiments taken in conjunction with the accompanying drawings. However, the disclosure is not limited to the embodiments disclosed below but may be implemented in various different ways, the embodiments are provided only to complete the disclosure and to fully inform the scope of the disclosure to those skilled in the art to which the disclosure pertains, and the disclosure is defined only by the scope of the claims. The same reference symbols are used throughout the description to refer to the same parts.

Meanwhile, it will be appreciated that blocks of a flowchart and a combination of flowcharts may be executed by computer program instructions. These computer program instructions may be loaded on a processor of a general purpose computer, special purpose computer, or programmable data processing equipment, and the instructions executed by the processor of a computer or programmable data processing equipment create a means for carrying out functions described in blocks of the flowchart. To implement the functionality in a certain way, the computer program instructions may also be stored in a computer usable or readable memory that is applicable in a specialized computer or a programmable data processing equipment, and it is possible for the computer program instructions stored in a computer usable or readable memory to produce articles of manufacture that contain a means for carrying out functions described in blocks of the flowchart. As the computer program instructions may be loaded on a computer or a programmable data processing equipment, when the computer program instructions are executed as processes having a series of operations on a computer or a programmable data processing equipment, they may provide steps for executing functions described in blocks of the flowchart.

Each block of a flowchart may correspond to a module, a segment or a code containing one or more executable instructions for executing one or more logical functions, or to a part thereof. It should also be noted that functions described by blocks may be executed in an order different from the listed order in some alternative cases. For example, two blocks listed in sequence may be executed substantially at the same time or executed in reverse order according to the corresponding functionality.

Here, the word "unit", "module", or the like used in the embodiments may refer to a software component or a hardware component such as an FPGA or ASIC capable of carrying out a function or an operation. However, "unit" or the like is not limited to hardware or software. A unit or the like may be configured so as to reside in an addressable storage medium or to drive one or more processors. For example, units or the like may refer to components such as a software component, object-oriented software component, class component or task component, processes, functions, attributes, procedures, subroutines, program code segments, drivers, firmware, microcode, circuits, data, databases, data structures, tables, arrays, or variables. A function provided by a component and unit may be a combination of smaller components and units, and it may be combined with others to compose larger components and units. Components and units may be implemented to drive one or more processors in a device or a secure multimedia card. In addition, a unit or the like may include one or more processors in an embodiment.

In contrast to early wireless communication systems that provided voice-oriented services only, advanced broadband wireless communication systems, such as 3GPP high speed packet access (HSPA) systems, long term evolution (LTE) or evolved universal terrestrial radio access (E-UTRA) systems, LTE-advanced (LTE-A) systems, 3GPP2 high rate packet data (HRPD) systems, ultra mobile broadband (UMB) systems, and IEEE 802.16e based systems, may provide high-speed and high-quality packet data services. In addition, communication standards are being developed for 5G or NR (new radio) systems as the fifth generation wireless communication system.

As a representative example of the broadband wireless communication system, the 5G or NR system employs orthogonal frequency division multiplexing (OFDM) in the downlink (DL) and the uplink (UL). More specifically, cyclic-prefix OFDM (CP-OFDM) is employed in the downlink, and discrete Fourier transform spreading OFDM (DFT-S-OFDM) is employed along with CP-OFDM in the uplink. The uplink refers to a radio link through which a UE sends a data or control signal to a base station, and the downlink refers to a radio link through which a base station sends a data or control signal to a UE. In such multiple access schemes, time-frequency resources used to carry user data or control information are allocated so as not to overlap each other (i.e., maintain orthogonality) to thereby identify the data or control information of a specific user.

The 5G or NR system employs hybrid automatic repeat request (HARQ) to retransmit data at the physical layer when a decoding error has occurred in the initial transmission. HARQ is a scheme that enables the receiver having failed in decoding data to transmit information (negative acknowledgement (NACK)) indicating the decoding failure to the transmitter so that the transmitter can retransmit the corresponding data at the physical layer. The receiver may combine the retransmitted data with the previously received data for which decoding has failed, increasing data reception performance. Further, when the data is correctly decoded, the receiver may send information (acknowledgement (ACK)) indicating successful decoding to the transmitter so that the transmitter can transmit new data.

Meanwhile, the NR (New Radio access technology) system as new 5G communication is being designed so that various services can be freely multiplexed in time and frequency resources, and the waveform, numerology, reference signals or the like can be dynamically or freely allocated according to the needs of corresponding services. On the other hand, in the 5G or NR system, the types of supported services can be divided into categories such as enhanced mobile broadband (eMBB), massive machine type communications (mMTC), and ultra-reliable and low-latency communications (URLLC). eMBB can be seen as services aimed at high-speed transmission of high-capacity data, mMTC can be seen as services aimed at connecting many UEs with minimal UE power, and URLLC can be seen as services aimed at high reliability and low latency. Different requirements may be applied according to the types of services related to the UE.

The terms described below are defined in consideration of their functions in the disclosure, and these may vary depending on the intention of the user, the operator, or the custom. Hence, their meanings should be determined based on the overall contents of this specification. In the following description, the term "base station" refers to a main agent allocating resources to terminals and may be at least one of gNode B (gNB), eNode B (eNB), Node B, BS, radio access unit, base station controller, or network node. The term "terminal" may refer to at least one of user equipment (UE), mobile station (MS), cellular phone, smartphone, computer, or multimedia system with a communication function. The following description on the disclosure is focused on the NR system, but it should be understood by those skilled in the art that embodiments of the disclosure are applicable to other communication systems having similar technical backgrounds or channel configurations. It should also be understood by those skilled in the art that embodiments of the disclosure are applicable to other communication systems without significant modifications departing from the scope of the disclosure.

In the disclosure, existing terms "physical channel" and "signal" may be used interchangeably with data or control signals. For example, the physical downlink shared channel (PDSCH) is a physical channel through which data is transmitted, but the PDSCH may be referred to as data in the disclosure. That is, PDSCH transmission and reception may be understood as data transmission and reception.

In the disclosure, higher signaling (or, may be used interchangeably with higher signal, higher layer signal, or higher layer signaling) is a method of transmitting a signal from the base station to the UE by using a downlink data channel of the physical layer, or from the UE to the base station by using an uplink data channel of the physical layer, and may be referred to as RRC signaling or MAC control element (CE).

As research on 5G communication systems is in progress, various methods for scheduling communication with UEs are being discussed. Here, there is a need for methods for efficient scheduling and data transmission and reception in consideration of the characteristics of the 5G communication system. In this regard, to provide plural services to a user in a communication system, there is a need for a method and an apparatus using the same for providing individual services within the same time period according to the characteristics of the corresponding services.

The UE needs to receive separate control information from the base station in order to transmit or receive data to or from the base station. However, in the case of periodically generated traffic or a service type requiring low latency and/or high reliability, it may be possible to transmit or receive data without the separate control information. In the disclosure, this transmission method is referred to as a data transmission method based on a configured grant (configured grant may be used interchangeably with grant-free or configured scheduling). The method of receiving or transmitting data after reception of data transmission resource configuration and related information through control information may be called first type signal transmission and reception, and the method of transmitting or receiving data based on preset information without control information may be called second type signal transmission and reception. For second type signal transmission and reception, resource regions set in advance exist periodically, and there are uplink type 1 grant (UL type 1 grant) in which these regions are configured only with a higher signal, and uplink type 2 grant (UL type 2 grant) (or, semi-persistent scheduling (SPS) or configured downlink assignment) in which these regions are configured with a combination of a higher signal and L1 signal (i.e., downlink control information (DCI)). In the case of UL type 2 grant (or, SPS), some information is determined by a higher signal, and other information such as whether actual data is transmitted is determined by an L1 signal. Here, L1 signals can be largely classified into a signal indicating activation of a resource configured by a higher signal, and a signal indicating release of an activated resource again.

The extended reality (XR) service refers to a service that requires high data transmission speed like eMBB, and also low latency and high reliability like URLLC. In addition, XR traffic may be aperiodic traffic in addition to data that occurs periodically like an existing voice service. For example, when transmitting and receiving information about virtual space reality in real time, event-based data may occur, and the data transmission speed requirements may vary accordingly. Hence, an aperiodic data transmission/reception technique that reflects such XR traffic characteristics may be required.

The disclosure includes, for a case where the DL SPS transmission period is aperiodic or smaller than 1 slot, a corresponding method for determining a semi-static HARQ-ACK codebook and a dynamic HARQ-ACK codebook, and a method for transmitting HARQ-ACK information. Additionally, the disclosure includes a method for uplink (UL) configured grant (CG) (or configured uplink grant) transmission in addition to DL SPS. In addition, the disclosure includes a configuration method for supporting aperiodic transmission of DL SPS and UL CG.

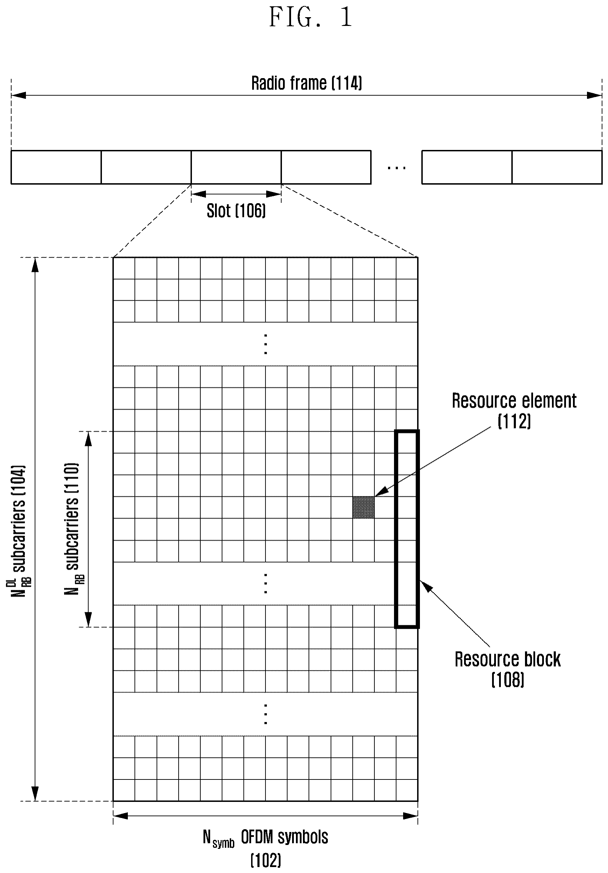

FIG. 1 is a diagram illustrating a transmission structure in a time-frequency domain serving as radio resource regions for the 5G or NR system.

With reference to FIG. 1, in the radio resource region, the horizontal axis denotes the time domain and the vertical axis denotes the frequency domain. In the time domain, the minimum transmission unit is OFDM symbols, and $N_{symb}$ OFDM symbols 102 are grouped to form one slot 106. The length of a subframe may be defined to be 1.0 ms, and the radio frame 114 may be defined to be 10 ms. In the frequency domain, the minimum transmission unit is subcarriers, and the total system transmission bandwidth may be composed of a total of $N_{BW}$ subcarriers 104. However, these specific numerical values may be variably applied depending on the system.

A basic unit in the time-frequency resource domain is a resource element (RE) 112, which may be represented by an OFDM symbol index and a subcarrier index. A resource block (RB) 108 may be defined as $N_{RB}$ consecutive subcarriers 110 in the frequency domain.

In general, the minimum transmission unit of data is the RB unit. Generally in the 5G or NR system, $N_{symb}$ = 14 and $N_{RB}$ = 12, and $N_{BW}$ is proportional to the bandwidth of the system transmission band. The data rate may be increased in proportion to the number of RBs scheduled for the UE. In the case of an FDD system where the downlink and the uplink are separated by a frequency in the 5G or NR system, the downlink transmission bandwidth and the uplink transmission bandwidth may be different from each other. The channel bandwidth represents an RF bandwidth corresponding to the system transmission bandwidth. Table 1 below shows the correspondence between the system transmission bandwidth and the channel bandwidth defined in the LTE system being 4th generation wireless communication before the 5G or NR system. For example, in an LTE system with a 10 MHz channel bandwidth, the transmission bandwidth is composed of 50 RBs.

[Table 1]

| Channel bandwidth BW$_{Channel}$ [MHz] | 1.4 | 3 | 5 | 10 | 15 | 20 |
|---|---|---|---|---|---|---|
| Transmission bandwidth configuration NRB | 6 | 15 | 25 | 50 | 75 | 100 |

In the 5G or NR system, a channel bandwidth wider than the channel bandwidth of LTE presented in Table 1 may be employed. Table 2 shows the correspondence between the system transmission bandwidth, the channel bandwidth, and the subcarrier spacing (SCS) in the 5G or NR system.

[Table 2]

| | SCS [kHz ] | Channel bandwidth BW$_{Channel}$ [MHz] | | | | | | | | | |
|---|---|---|---|---|---|---|---|---|---|---|---|
| | | 5 | 1 0 | 15 | 20 | 25 | 40 | 50 | 60 | 80 | 100 |
| Maximum Transmission bandwidth N$_{RB}$ | 15 | 25 | 5 2 | 79 | 106 | 13 3 | 21 6 | 27 0 | N.A. | N.A. | N.A. |
| | 30 | 11 | 2 4 | 38 | 51 | 65 | 10 6 | 13 3 | 162 | 217 | 273 |
| | 60 | N.A | 1 | 18 | 24 | 31 | 51 | 65 | 79 | 107 | 135 |
| | | . | 1 | | | | | | | | |

In the 5G or NR system, scheduling information for uplink data or downlink data is transmitted from the base station to the UE through downlink control information (DCI). DCI is defined according to various formats, each format may indicate whether scheduling information is for uplink data (UL grant) or for downlink data (DL grant), whether to use compact DCI with a small size of control information, whether to apply spatial multiplexing using multiple antennas, whether DCI is for power control, or the like. For example, DCI format 1_1, which is scheduling control information (DL grant) for downlink data, may include at least one of the following control information.

- Carrier indicator: indicates the frequency carrier over which it is transmitted.
- DCI format indicator: indicator distinguishing whether the corresponding DCI is for downlink or for uplink.
- Bandwidth part (BWP) indicator: indicates the BWP through which it is transmitted.
- Frequency domain resource allocation: indicates an RB in frequency domain allocated for data transmission. The resource to be represented depends on the system bandwidth and resource allocation scheme.
- Time domain resource allocation: indicates the OFDM symbol in a slot where the data-related channel is to be transmitted.
- VRB-to-PRB mapping: indicates how to map a virtual RB (VRB) index to a physical RB (PRB) index.
- Modulation and coding scheme (MCS): indicates the modulation scheme and coding rate used for data transmission. That is, it may indicate the transport block size (TBS), and a coding rate value notifying channel coding information, along with information indicating whether QPSK (quadrature phase shift keying), 16QAM (quadrature amplitude modulation), 64QAM, or 256QAM is used.
- Code block group (CBG) transmission information: indicates information on which CBG is transmitted when CBG retransmission is configured.
- HARQ process number: indicates a HARQ process number.
- New data indicator: indicates either HARQ initial transmission or retransmission.
- Redundancy version: indicates a HARQ redundancy version.
- Physical uplink control channel (PUCCH) resource indicator (PUCCH resource indicator): indicates a PUCCH resource used to transmit ACK/NACK information for downlink data.
- PDSCH-to-HARQ feedback timing indicator: indicates a slot in which ACK/NACK information for downlink data is transmitted.
- Transmit power control (TPC) command for PUCCH: indicates a transmit power control command for the uplink control channel PUCCH.

For PUSCH transmission, time domain resource allocation may be transmitted by information about a slot in which PUSCH is transmitted, a start OFDM symbol position S in the corresponding slot, and the number of OFDM symbols L to which PUSCH is mapped. Here, S may be a relative position from the start of the slot, L may be the number of consecutive OFDM symbols, and S and L may be determined from a start and length indicator value (SLIV) as defined below.

$$\text{If } (L\text{-}1) \leq 7 \text{ then}$$

$$SLIV = 14*(L\text{-}1)+S$$

$$\text{else}$$

$$SLIV = 14*(14\text{-}L+1)+(14\text{-}1\text{-}S)$$

$$\text{where } 0 < L \leq 14\text{-}S$$

In the 5G or NR system, a table whose each row includes information about SLIV value, PUSCH mapping type, and slot in which PUSCH is transmitted may be configured generally through RRC configuration. Then, in the time domain resource allocation of the DCI, by indicating the index value in the configured table, the base station may deliver information about the SLIV value, the PUSCH mapping type, and the slot in which PUSCH is transmitted to the UE. This method also applies to PDSCH.

Specifically, when the base station instructs the UE on time resource allocation field index m included in the DCI for scheduling PDSCH, this notifies a combination of DRMS type A position information, PDSCH mapping type information, slot index K0, data resource start symbol S, and data resource allocation length L corresponding to m+1 in the table indicating time domain resource allocation information. As an example, Table 3 below is a table including PDSCH time domain resource allocation information based on the normal cyclic prefix.

[Table 3]

| Row index | dmrs-Type A-Position | PDSCH mapping type | $K_0$ | S | L |
|---|---|---|---|---|---|
| 1 | 2 | Type A | 0 | 2 | 12 |
| | 3 | Type A | 0 | 3 | 11 |
| 2 | 2 | Type A | 0 | 2 | 10 |
| | 3 | Type A | 0 | 3 | 9 |
| 3 | 2 | Type A | 0 | 2 | 9 |
| | 3 | Type A | 0 | 3 | 8 |
| 4 | 2 | Type A | 0 | 2 | 7 |
| | 3 | Type A | 0 | 3 | 6 |
| 5 | 2 | Type A | 0 | 2 | 5 |
| | 3 | Type A | 0 | 3 | 4 |
| 6 | 2 | Type B | 0 | 9 | 4 |
| | 3 | Type B | 0 | 10 | 4 |
| 7 | 2 | Type B | 0 | 4 | 4 |
| | 3 | Type B | 0 | 6 | 4 |
| 8 | 2,3 | Type B | 0 | 5 | 7 |
| 9 | 2,3 | Type B | 0 | 5 | 2 |
| 10 | 2,3 | Type B | 0 | 9 | 2 |
| 11 | 2,3 | Type B | 0 | 12 | 2 |
| 12 | 2,3 | Type A | 0 | 1 | 13 |
| 13 | 2,3 | Type A | 0 | 1 | 6 |
| 14 | 2,3 | Type A | 0 | 2 | 4 |
| 15 | 2,3 | Type B | 0 | 4 | 7 |
| 16 | 2,3 | Type B | 0 | 8 | 4 |

In Table 3, dmrs-typeA-Position is a field indicating the symbol position at which DMRS is transmitted in one slot indicated by a system information block (SIB), which is one of UE common control information. A possible value for this field is 2 or 3. When the number of symbols constituting one slot is 14 in total and the first symbol index is 0, 2 means the third symbol and 3 means the fourth symbol. In Table 3, PDSCH mapping type is information indicating the location of a DMRS in the scheduled data resource region. In the case of PDSCH mapping type A, the DMRS is always transmitted or received at the symbol position determined by dmrs-typeA-Position regardless of the allocated data time domain resource. In the case of PDSCH mapping type B, the DMRS is always transmitted and received in the first symbol among the allocated data time domain resource. In other words, PDSCH mapping type B does not use dmrs-typeA-Position information.

In Table 3, $K_0$ denotes an offset between the slot index associated with the PDCCH through which DCI is transmitted and the slot index associated with the PDSCH or PUSCH scheduled by the corresponding DCI. For example, when the slot index of the PDCCH is n, the slot index of the PDSCH or PUSCH scheduled by the DCI of the PDCCH is $n+K_0$. In Table 3, S denotes the start symbol index of a data time domain resource within one slot. The range of possible S values is 0 to 13 in case of the normal cyclic prefix. In Table 3, L denotes the length of the data time domain resource interval within one slot. The range of possible L values is 1 to 14.

In the 5G or NR system, type A and type B are defined for the PUSCH mapping. In PUSCH mapping type A, the first OFDM symbol of DMRS OFDM symbols is located at the second or third OFDM symbol of the slot. In PUSCH mapping type B, the first OFDM symbol of DMRS OFDM symbols is located at the first OFDM symbol in the time domain resource allocated for PUSCH transmission. The above-described PUSCH time domain resource allocation method may be equally applicable to PDSCH time domain resource allocation.

The DCI may be transmitted on the physical downlink control channel (PDCCH), (may be used interchangeably with control information), after channel coding and modulation. In general, the DCI is scrambled with a specific radio network temporary identifier (RNTI, or UE identifier) independently for each UE, a cyclic redundancy identify (CRC) is added, channel coding is performed, and independent PDCCHs are composed for transmission. The PDCCH is transmitted by being mapped to a control resource set (CORESET) configured to the UE.

Downlink data may be transmitted on the physical downlink shared channel (PDSCH), which is a physical channel for downlink data transmission. The PDSCH may be transmitted after the control channel transmission period, and scheduling information such as a specific mapping position in the frequency domain and a modulation scheme is determined based on the DCI transmitted through the PDCCH.

Through the MCS among the control information constituting the DCI, the base station notifies the UE of the modulation scheme applied to the PDSCH to be transmitted and the size of the data to be transmitted (transport block size (TBS)). In one embodiment, the MCS may be composed of 5 bits or more or fewer bits. The TBS corresponds to the size of data (transport block, TB) that the base station desires to transmit before channel coding for error correction is applied.

In the disclosure, the transport block (TB) may include a medium access control (MAC) header, a MAC CE, one or more MAC service data units (MAC SDUs), and padding bits. Or, the TB may indicate the unit of data being delivered from the MAC layer to the physical layer, or a MAC protocol data unit (MAC PDU).

The modulation schemes supported by the 5G or NR system are quadrature phase shift keying (QPSK), 16 quadrature amplitude modulation (16QAM), 64QAM, and 256QAM, whose modulation orders ($Q_m$) correspond to 2, 4, 6 and 8, respectively. That is, 2 bits per symbol may be transmitted in the case of QPSK modulation, 4 bits per OFDM symbol may be transmitted in the case of 16QAM modulation, 6 bits per symbol may be transmitted in the case of 64QAM modulation, and 8 bits per symbol may be transmitted in the case of 256QAM modulation.

When the PDSCH is scheduled by the DCI, HARQ-ACK information indicating whether decoding of the PDSCH has succeeded or failed is transmitted from the UE to the base station through the PUCCH. This HARQ-ACK information is transmitted in the slot indicated by the PDSCH-to-HARQ feedback timing indicator included in the DCI for scheduling the PDSCH, and values mapped respectively to the PDSCH-to-HARQ feedback timing indicator of 1 to 3 bits are set by a higher layer signal as shown in Table 4. When the PDSCH-to-HARQ feedback timing indicator indicates k, the UE transmits HARQ-ACK information, after k slots from slot n where the PDSCH is transmitted, that is, in slot n+k.

[Table 4]

| PDSCH-to-HARQ_feedback timing indicator | | | Number of slots k |
|---|---|---|---|
| 1 bit | 2 bits | 3 bits | |
| '0' | '00' | '000' | 1st value provided by *dl-DataToUL-ACK* |
| '1' | '01' | '001' | 2nd value provided by *dl-DataToUL-ACK* |
| | '10' | '010' | 3rd value provided by *dl-DataToUL-ACK* |
| | '11' | '011' | 4th value provided by *dl-DataToUL-ACK* |
| | | '100' | 5th value provided by *dl-DataToUL-ACK* |
| | | '101' | 6th value provided by *dl-DataToUL-ACK* |
| | | '110' | 7th value provided by *dl-DataToUL-ACK* |
| | | '111' | 8th value provided by *dl-DataToUL-ACK* |

When no PDSCH-to-HARQ feedback timing indicator is included in DCI format 1_1 for scheduling the PDSCH, the UE transmits HARQ-ACK information in slot n+k according to the value k configured by higher layer signaling for HARQ-ACK information. When the UE transmits HARQ-ACK information on the PUCCH, it transmits HARQ-ACK information to the base station by using a PUCCH resource determined based on a PUCCH resource indicator included in the DCI for scheduling the PDSCH. Here, the ID of the PUCCH resource mapped to the PUCCH resource indicator may be configured through higher layer signaling.

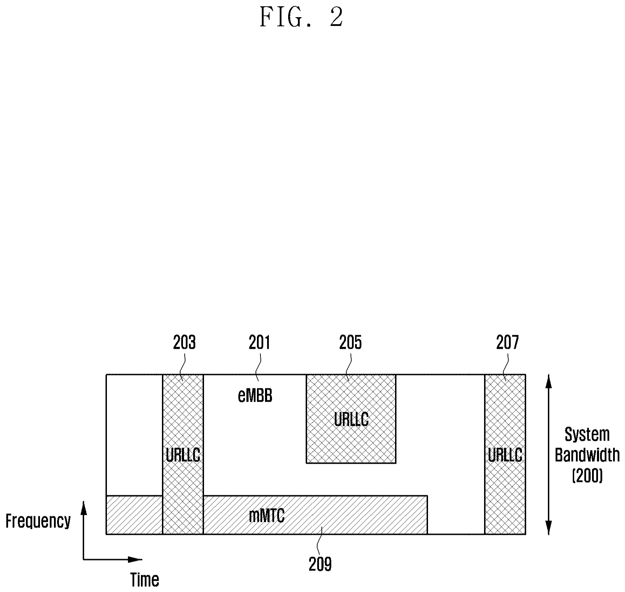

FIG. 2 is a diagram illustrating an example of allocating eMBB data, URLLC data, and mMTC data in the time-frequency resource domain in the 5G or NR system.

With reference to FIG. 2, pieces of data for eMBB, URLLC, and mMTC may be allocated over the entire system frequency bandwidth 200. When URLLC data 203, 205 and 207 are generated and their transmission is required while eMBB data 201 and mMTC data 209 have been allocated in specific frequency bands and are being transmitted, the transmitter may transmit the URLLC data 203, 205 and 207 by emptying the portions already allocated to eMBB data 201 and mMTC data 209 or not transmitting them. Among the above services, URLLC needs to reduce the latency time, URLLC data may be allocated to portions of the resources to which eMBB or mMTC data is allocated and transmitted. When URLLC data is additionally allocated and transmitted through the resource already allocated to eMBB data, the eMBB data may be not transmitted on the overlapping frequency-time resource, and the transmission performance of eMBB data may be lowered accordingly. That is, eMBB data transmission may fail due to URLLC allocation.

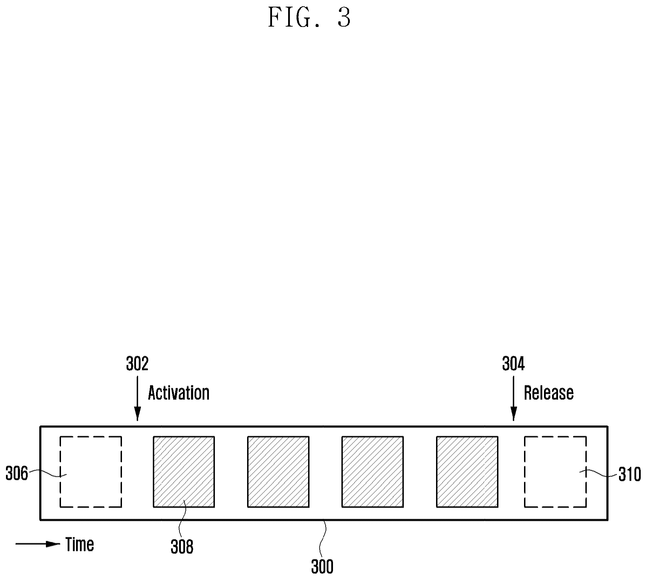

FIG. 3 is a diagram illustrating grant-free transmission and reception operations.

There are a first signal transmission and reception type where the UE performs downlink data reception according to information set only by a higher signal from the base station, and a second signal transmission and reception type where the UE performs downlink data reception according to transmission configuration information indicated by a higher signal and an L1 signal. The disclosure mainly describes a UE operation method as to the second signal transmission and reception type. In the disclosure, SPS being of the second signal type for downlink data reception means grant-free PDSCH transmission in the downlink. In DL SPS, the UE may receive grant-free PDSCH transmission through a higher signal configuration and additional configuration information indicated by the DCI.

DL SPS stands for downlink semi-persistent scheduling, and is a method in which the base station periodically transmits or receives downlink data information to or from the UE based on information set through higher signaling without scheduling specific downlink control information. This can be applied in situations where VoIP or traffic is periodically generated. Or, although the resource configuration for DL SPS is periodic, the data actually generated may be aperiodic. In this case, since the UE does not know whether actual data is generated at the periodically configured resources, it may perform the following two types of operations.

- Method 3-1: for the periodically configured DL SPS resource region, the UE transmits HARQ-ACK information for the demodulation/decoding result of the received data to the base station through an uplink resource region associated with the corresponding resource region
- Method 3-2: for the periodically configured DL SPS resource region, when signal detection for at least DMRS or data is successfully performed, the UE transmits HARQ-ACK information for the demodulation/decoding result of the received data to the base station through an uplink resource region associated with the corresponding resource region
- Method 3-3: for the periodically configured DL SPS resource region, when decoding/demodulation is successful (i.e., ACK generation), the UE transmits HARQ-ACK information for the demodulation/decoding result of the received data to the base station through an uplink resource region associated with the corresponding resource region

In Method 3-1, even if the base station does not actually transmit downlink data through the DL SPS resource region, the UE always transmits HARQ-ACK information through the uplink resource region corresponding to the DL SPS resource region. In Method 3-2, since the UE does not know when the base station will transmit data through the DL SPS resource region, it may be possible for the UE to transmit HARQ-ACK information when it knows that data has been transmitted or received, such as when DMRS detection or CRC detection is successful. In Method 3-3, only when data demodulation/decoding is successful, the UE transmits HARQ-ACK information through an uplink resource region corresponding to the DL SPS resource region.

The UE may support one of only or two more of the above-described methods. It may be possible to select one of the above methods according to the 3GPP standard specification or a higher signal. For example, when Method 3-1 is indicated by a higher signal, it may be possible for the UE to transmit HARQ-ACK information for corresponding DL SPS based on Method 3-1. Alternatively, it may be possible to select one method according to DL SPS higher configuration information. As an example, if the transmission periodicity is n slots or more in the DL SPS higher configuration information, the UE may apply Method 3-1, and the UE may apply Method 3-3 otherwise. In this illustration, the transmission periodicity is taken as an example, but it may be sufficiently possible to apply the above methods according to the MCS table, DMRS configuration information, resource configuration information, or the like.

The UE performs downlink data reception in a downlink resource region configured by higher signaling. L1 signaling may be used to activate or release the downlink resource region configured by higher signaling.

FIG. 3 illustrates operations for DL SPS. The UE is configured with the following DL SPS configuration information through a higher signal.

- Periodicity: DL SPS transmission periodicity
- nrofHARQ-Processes: the number of HARQ processes configured for DL SPS
- n1PUCCH-AN: HARQ resource configuration information for DL SPS
- mcs-Table: MCS table configuration information applied to DL SPS

In the disclosure, pieces of DL SPS configuration information may be set for each Pcell or each Scell, and may also be set for each bandwidth part (BWP). Further, it may be possible to configure one or more DL SPSs for each BWP in a specific cell.

In FIG. 3, the UE determines grant-free transmission and reception configuration information 300 through reception of a higher signal for DL SPS. In DL SPS, data transmission and reception may be possible as to the resource region 308 configured after reception of the DCI indicating activation (302), and data transmission and reception cannot be performed as to the resource region 306 configured before receiving the corresponding DCI. In addition, the UE cannot receive data as to the resource region 310 configured after reception of the DCI indicating release (304).

For SPS scheduling activation or release, the UE validates a DL SPS assignment PDCCH when both of the following two conditions are satisfied.

- Condition 1: the CRC bits of the DCI format transmitted on the above PDCCH are scrambled with the CS-RNTI set by higher signaling
- Condition 2: the new data indicator (NDI) field for the enabled transport block is set to '0'

When some of the fields constituting the DCI format transmitted on the DL SPS assignment PDCCH are the same as those shown in Table 5 or Table 6, the UE determines that the information of the DCI format is valid activation or valid release of DL SPS. For example, when the UE detects a DCI format including the information shown in Table 5, the UE determines that DL SPS is activated. As another example, when the UE detects a DCI format including the information shown in Table 6, the UE determines that DL SPS is released.

When none of the fields constituting the DCI format transmitted on the DL SPS assignment PDCCH are the same as those shown in Table 5 (special field configuration information for DL SPS activation) or Table 6 (special field configuration information for DL SPS release), the UE determines that the DCI format is detected with a non-matching CRC.

[Table 5]

|  | DCI format 1_0 | DCI format 1_1 |
|---|---|---|
| HARQ process number | set to all '0's | set to all '0's |
| Redundancy version | set to '00' | For the enabled transport block: set to '00' |

[Table 6]

|  | DCI format 1_0 |
|---|---|
| HARQ process number | set to all '0's |
| Redundancy version | set to '00' |
| Modulation and coding scheme | set to all '1's |
| Resource block assignment | set to all '1's |

When the UE receives a PDSCH without receiving a PDCCH or receives a PDCCH indicating SPS PDSCH release, it generates corresponding HARQ-ACK information bits. Further, at least in Rel-15 NR, the UE does not expect to transmit HARQ-ACK information for reception of two or more SPS PDSCHs on one PUCCH resource. In other words, at least in Rel-15 NR, the UE includes HARQ-ACK information only for reception of one SPS PDSCH in one PUCCH resource.

DL SPS may be configured in both the primary cell (PCell) and the secondary cell (SCell). Parameters that can be configured by DL SPS higher signaling are as follows.

- Periodicity: DL SPS transmission periodicity
- nrofHARQ-processes: the number of HARQ processes that can be configured for DL SPS
- n1PUCCH-AN: PUCCH HARQ resource for DL SPS, the base station configures the resource by use of PUCCH format 0 or 1

Table 5 and Table 6 described above may be fields possible in a situation where only one DL SPS can be set for each cell and for each BWP. In a situation where plural DL SPSs are configured for each cell and for each BWP, DCI fields for activating (or releasing) each DL SPS resource may vary. The disclosure provides a method for resolving such a situation.

In the disclosure, not all DCI formats described in Table 5 or Table 6 are used to activate and release the DL SPS resources, respectively. For example, DCI format 1_0 and DCI format 1_1 used to schedule the PDSCH are used for activating the DL SPS resource. For example, DCI format 1_0 used for scheduling the PDSCH is used for releasing the DL SPS resource.

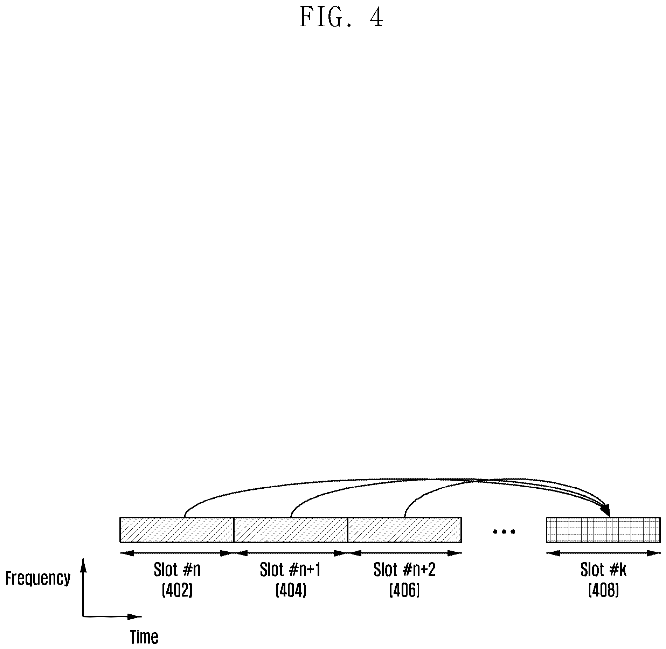

FIG. 4 is a diagram illustrating a method for configuring a semi-static HARQ-ACK codebook in the NR system.

In the situation where a UE is limited to transmitting one HARQ-ACK PUCCH within a slot, upon receiving a semi-static HARQ-ACK codebook higher configuration, the UE reports HARQ-ACK information for PDSCH reception or SPS PDSCH release within the HARQ-ACK codebook in a slot indicated by the PDSCH-to-HARQ_feedback timing indicator value in DCI format 1_0 or DCI format 1_1. The UE reports the HARQ-ACK information bit value as NACK within the HARQ-ACK codebook in a slot not indicated by the PDSCH-to-HARQ_feedback_timing_indicator field in DCI format 1_0 or DCI format 1_1. If the UE reports HARQ-ACK information only for one SPS PDSCH release or one PDSCH reception among $M_{A,C}$ occasions for candidate PDSCH receptions, and if the report is scheduled by DCI format 1_0 including a counter DACI field set to 1 on the PCell, the UE determines one HARQ-ACK codebook for the corresponding SPS PDSCH release or the corresponding PDSCH reception.

In other cases, HARQ-ACK codebook determination is performed according to the method described below.

If the set of candidate PDSCH reception occasions in serving cell c is $M_{A,c}$, $M_{A,c}$ may be found through the steps of pseudo-code 1 below.

[Start of pseudo-code 1]

- Step 1: Initialize j to 0 and initialize $M_{A,c}$ to an empty set. Initialize k, the HARQ-ACK transmission timing index, to 0.
- Step 2: Configure R as a set of rows in a table including slot information to which a PDSCH is mapped, start symbol information, number of symbols, or length information. If the PDSCH-capable mapping symbol indicated by each value of R is configured as an UL symbol according to the DL and UL configurations configured by the higher layer, the corresponding row is deleted from R.
- Step 3-1: If the UE may receive one PDSCH for unicast in one slot, and R is not an empty set, one is added to the set $M_{A,c}$.
- Step 3-2: If the UE may receive more than one PDSCH for unicast in one slot, the number of PDSCHs that can be allocated to different symbols in the calculated R is counted and the corresponding counted number is added to $M_{A,c}$.
- Step 4: Increase k by 1 and start again from step 2.

[End of pseudo-code 1]

To describe pseudo-code 1 above utilizing FIG. 4 as an example, for performing HARQ-ACK PUCCH transmission in slot #k 408, all candidates slots capable of PDSCH-to-HARQ-ACK timing which can indicate slot #k 408 are considered. In FIG. 4, it is assumed that only PDSCHs scheduled in slot #n 402, slot #n+1 (404), and slot #n+2 (406) may allow HARQ-ACK transmission in slot #k 408 by a possible combination of PDSCH-to-HARQ-ACK timings. In addition, the maximum number of PDSCHs that can be scheduled for each slot is derived in consideration of time-domain resource configuration information of a PDSCH that can be scheduled in each of slots 402, 404, and 406, and information indicating whether a symbol in a slot is for downlink or uplink. For example, when the maximum scheduling is possible for 2 PDSCHs in slot 402, 3 PDSCHs in slot 404, and 2 PDSCHs in slot 406, the maximum number of PDSCHs included in the HARQ-ACK codebook transmitted in slot 308 is seven in total. This is called the cardinality of the HARQ-ACK codebook.

Step 3-2 above within a specific slot is described through Table 7 below (default PDSCH time domain resource allocation A for normal CP).

[Table 7]

| Row inde x | dmrs-TypeA-Position | PDSCH mapping type | $K_0$ | S | L | Ending | Order |
|---|---|---|---|---|---|---|---|
| 1 | 2 | Type A | 0 | 2 | 12 | 13 | 1x |
| | 3 | Type A | 0 | 3 | 11 | 13 | 1x |
| 2 | 2 | Type A | 0 | 2 | 10 | 11 | 1x |
| | 3 | Type A | 0 | 3 | 9 | 11 | 1x |
| 3 | 2 | Type A | 0 | 2 | 9 | 10 | 1x |
| | 3 | Type A | 0 | 3 | 8 | 10 | 1x |
| 4 | 2 | Type A | 0 | 2 | 7 | 8 | 1x |
| | 3 | Type A | 0 | 3 | 6 | 8 | 1x |
| 5 | 2 | Type A | 0 | 2 | 5 | 6 | 1x |
| | 3 | Type A | 0 | 3 | 4 | 6 | 1x |

(continued)

| Row inde x | dmrs-TypeA-Position | PDSCH mapping type | $K_0$ | S | L | Ending | Order |
|---|---|---|---|---|---|---|---|
| 6 | 2 | Type B | 0 | 9 | 4 | 12 | 2x |
| | 3 | Type B | 0 | 10 | 4 | 13 | 3 |
| 7 | 2 | Type B | 0 | 4 | 4 | 7 | 1x |
| | 3 | Type B | 0 | 6 | 4 | 9 | 2 |
| 8 | 2,3 | Type B | 0 | 5 | 7 | 11 | 1x |
| 9 | 2,3 | Type B | 0 | 5 | 2 | 6 | 1x |
| 10 | 2,3 | Type B | 0 | 9 | 2 | 10 | 2x |
| 11 | 2,3 | Type B | 0 | 12 | 2 | 13 | 3x |
| 12 | 2,3 | Type A | 0 | 1 | 13 | 13 | 1x |
| 13 | 2,3 | Type A | 0 | 1 | 6 | 6 | 1x |
| 14 | 2,3 | Type A | 0 | 2 | 4 | 5 | 1 |
| 15 | 2,3 | Type B | 0 | 4 | 7 | 10 | 1x |
| 16 | 2,3 | Type B | 0 | 8 | 4 | 11 | 2x |

Table 7 is a time resource allocation table in which the UE operates by default before receiving time resource allocation via a separate RRC signal. For reference, in addition to separately indicating the row index value via RRC, the PDSCH time resource allocation value is determined by UE-common RRC signal dmrs-TypeA-Position. In Table 7 above, the "ending" and "order" columns are values added separately for convenience of explanation and may be not actually present. The "ending" column indicates the end symbol of the scheduled PDSCH, and the "order" column indicates a code position value within a specific codebook in the semi-static HARQ-ACK codebook. This table is applied to time resource allocation applied in DCI format 1_0 of the PDCCH common search space.

For the UE to determine the HARQ-ACK codebook by calculating the maximum number of non-overlapping PDSCHs in a specific slot, the UE performs the following steps.

* Step 1: Find a PDSCH allocation value that ends first in the slot among all the rows of the PDSCH time resource allocation table. In Table 7, it can be seen that the row index of 14 ends first. Mark it as "1" in the order column. Other row indexes overlapping with the row index of 14 by at least one symbol are marked as "1x" in the order column.
* Step 2: Find a PDSCH allocation value that ends first among the remaining row indexes that are not marked in the order column. In Table 7, a row with a row index of 7 and a dmrs-TypeA-Position value of 3 corresponds to this value. Other row indexes overlapping with the corresponding row index by at least one symbol are marked as "2x" in the order column.
* Step 3: Repeat step 2 by increasing the order value. As an example, in Table 7, find a PDSCH allocation value that ends first among the row indices not marked in the order column. In Table 7, a row with a row index of 6 and a dmrs-TypeA-Position value of 3 corresponds to this value. Other row indices overlapping with the corresponding row index by at least one symbol are marked as "3x" in the order column.
* Step 4: When the order is marked for all row indices, the process ends. Then, the magnitude of the order indicates the maximum number of PDSCHs that can be scheduled without time overlap in the corresponding slot. Scheduling without time overlap means that different PDSCHs are scheduled with TDM.

In the order column of Table 7, the maximum value of the order indicates the HARQ-ACK codebook size in the corresponding slot, and the order value means a HARQ-ACK codebook point at which the HARQ-ACK feedback bit for the corresponding scheduled PDSCH is located. For example, the row index of 16 in Table 7 means that it is located at a second code position in a semi-static HARQ-ACK codebook with a size of 3. When the set of occasions for candidate PDSCH receptions on serving cell c is $M_{A,c}$, the UE transmitting HARQ-ACK feedback may obtain $M_{A,c}$ through the steps of pseudo-code 1 or pseudo-code 2. $M_{A,c}$ may be used to determine the number of HARQ-ACK bits to be transmitted by the UE. Specifically, the HARQ-ACK codebook may be composed based on the cardinality of set $M_{A,c}$.

As another example, the following may be considered for determining a semi-static HARQ-ACK codebook (or, type 1 HARQ-ACK codebook).

a) on a set of slot timing values $K_1$ associated with the active UL BWP

a) If the UE is configured to monitor PDCCH for DCI format 1_0 and is not configured to monitor PDCCH for DCI format 1_1 on serving cell c. $K_1$ is provided by the slot timing values {1, 2, 3, 4, 5, 6, 7, 8} for DCI format 1_0
b) If the UE is configured to monitor PDCCH for DCI format 1_1 for serving cell c, $K_1$ is provided by *dl-DataToUL-ACK* for DCI format 1_1

b) on a set of row indexes R of a table that is provided either by a first set of row indexes of a table that is provided by *PDSCH-TimeDomainResourceAllocationList* in *PDSCH-ConfigCommon* or by Default PDSCH time domain resource allocation A [6, TS 38.214], or by the union of the first set of row indexes and a second set of row indexes, if provided by *PDSCH-TimeDomainResourceAllocationList* in *PDSCH-Config,* associated with the active DL BWP and defining respective sets of slot offsets $K_0$, start and length indicators *SLIV*, and PDSCH mapping types for PDSCH reception as described in [6, TS 38.214]
c) on the ratio $2^{\mu_{DL}-\mu_{UL}}$ between the downlink SCS configuration $\mu_{DL}$ and the uplink SCS configuration $\mu_{UL}$ provided by *subcarrierSpacing* in *BWP-Downlink* and *BWP-Uplink* for the active DL BWP and the active UL BWP, respectively
d) if provided, on *TDD-UL-DL-ConfigurationCommon* and *TDD-UL-DL-ConfigDedicated*

as described in Subclause 11.1.

As another example, the pseudo-code for HARQ-ACK codebook determination may be as follows.

[Start of pseudo-code 2]

For the set of slot timing values $K_1$, the UE determines a set of $M_{A,c}$ occasions for candidate PDSCH receptions or SPS PDSCH releases according to the following pseudo-code. A location in the Type-1 HARQ-ACK codebook for HARQ-ACK information corresponding to a SPS PDSCH release is same as for a corresponding SPS PDSCH reception.

Set $j = 0$ - index of occasion for candidate PDSCH reception or SPS PDSCH release

Set $B = \varnothing$

Set $M_{A,c} = \varnothing$

Set $c(K_1)$ to the cardinality of set $K_1$

Set $k = 0$ - index of slot timing values $K_{1,k}$, in descending order of the slot timing values, in set $K_1$ for serving cell $c$

while $k < c(K_1)$

if $\mod(n_U - K_{1,k} + 1, \max(2^{\mu_{UL}-\mu_{DL}}, 1)) = 0$

Set $n_D = 0$ - index of a DL slot within an UL slot

while $n_D < \max(2^{\mu_{DL}-\mu_{UL}}, 1)$

Set R to the set of rows

Set $c(R)$ to the cardinality of R

Set r=0 - index of row in set R

if slot $n_U$ starts at a same time as or after a slot for an active DL BWP change on serving cell c or an active UL BWP change on the PCell and slot $\lfloor (n_U - K_{1,k}) * 2^{\mu_{DL}-\mu_{UL}} \rfloor + n_D$ is before the slot for the active DL BWP change on serving cell c or the active UL BWP change on the PCell

continue;

else

while $r < c(R)$

if the UE is provided TDD-UL-DL-ConfigurationCommon or TDD-UL-DL-ConfigDedicated and, for each slot from slot $\lfloor (n_U - K_{1,k}) * 2^{\mu_{DL}-\mu_{UL}} \rfloor + n_D - N_{PDSCH}^{repeat} + 1$ to slot $\lfloor (n_U - K_{1,k}) * 2^{\mu_{DL}-\mu_{UL}} \rfloor + n_D$, at least one symbol of the PDSCH time resource derived by row r is configured as UL where $K_{1,k}$ is the $k$-th slot timing value in set $K_1$,

$R = R/r$;

end if

```
                                    r=r+1;
                                 end while
                                 if the UE does not indicate a capability to receive more than one
        unicast PDSCH per slot and $R \neq \varnothing$,

                                    $M_{A,c} = M_{A,c} \bigcup j$;

                                 j=j+1;
                                 The UE does not expect to receive SPS PDSCH release and
        unicast PDSCH in a same slot;
                                 else
                                    Set $c(R)$ to the cardinality of R
                                    Set m to the smallest last OFDM symbol index, as determined
        by the SLIV, among all rows of R

                                       while $R \neq \varnothing$
                                          Set r=0
                                       while $r < c(R)$

                                          if $S \leq m$ for start OFDM symbol index S for row r

                                             $b_{r,k,n_D} = j$; - index of occasion for candidate
        PDSCH reception or SPS PDSCH release associated with row r
                                             R=R/r;

                                             $B = B \bigcup b_{r,k,n_D}$;

                                          end if
                                          r=r+1;
                                       end while

                                          $M_{A,c} = M_{A,c} \bigcup j$

                                       j=j+1;
                                       Set m to the smallest last OFDM symbol index among
        all rows of R;

                                       end while
                                          end if
                                       end if
                                       $n_D = n_D + 1$;

                                    end while
                                 end if
                                 $k = k + 1$;

                              end while
```

## [End of pseudo-code 2]

In pseudo-code 2, the position of the HARQ-ACK codebook including HARQ-ACK information for the DCI indicating DL SPS release is based on the position at which the DL SPS PDSCH is received. For example, if the DL SPS PDSCH starts from the 4th OFDM symbol relative to the corresponding slot and its length is 5 symbols, HARQ-ACK information including DL SPS release indicating release of the corresponding SPS is assumed to be mapped to a PDSCH that starts from the 4th OFDM symbol of the slot in which the DL SPS release is transmitted and is 5 symbols long, and the corresponding HARQ-ACK information is determined through the PDSCH-to-HARQ-ACK timing indicator and PUSCH resource indicator included in the control information indicating the DL SPS release. As another example, if the DL SPS PDSCH starts from the 4th OFDM symbol relative to the corresponding slot and its length is 5 symbols, HARQ-ACK information including DL SPS release indicating release of the corresponding SPS is assumed to be mapped to a PDSCH that starts from the 4th OFDM symbol of the slot indicated by the TDRA (time domain resource allocation) of the DCI being DL SPS release and is 5 symbols long, and the corresponding HARQ-ACK information is determined through the PDSCH-to-HARQ-ACK timing indicator and PUSCH resource indicator included in the control information indicating the DL SPS release.

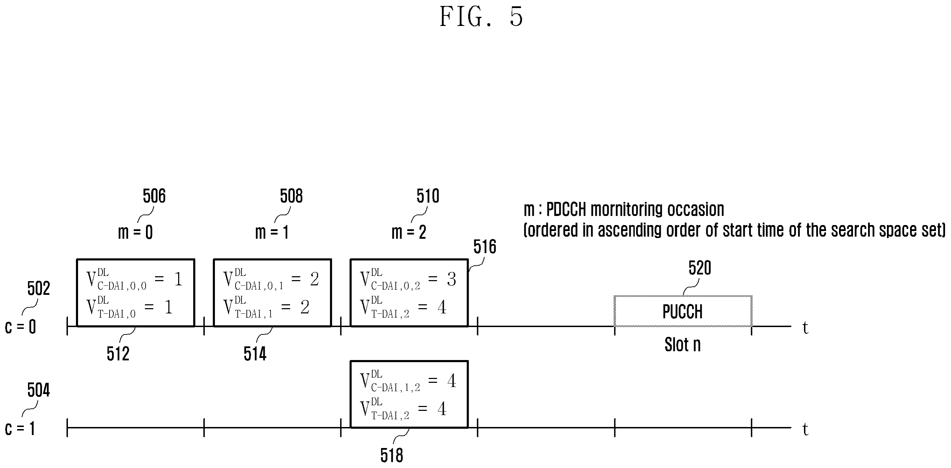

FIG. 5 is a diagram illustrating a method for configuring a dynamic HARQ-ACK codebook in the NR system.

The UE transmits HARQ-ACK information within a PUCCH in slot n based on the PDSCH-to-HARQ_feedback timing value for PUCCH transmission of HARQ-ACK information in slot n for PDSCH reception or SPS PDSCH release, and K0 being transmission slot location information for the PDSCH scheduled by DCI format 1_0 or 1_1. Specifically, for transmitting the HARQ-ACK information described above, the UE determines the HARQ-ACK codebook of the PUCCH transmitted in the slot determined by PDSCH-to-HARQ_feedback timing and K0 based on the DAI included in the DCI indicating PDSCH or SPS PDSCH release.

The DAI is composed of counter DAI and total DAI. The counter DAI is information that indicates the position of HARQ-ACK information corresponding to the PDSCH scheduled in DCI format 1_0 or DCI format 1_1 in the HARQ-ACK codebook. Specifically, the value of counter DAI in DCI format 1_0 or 1_1 informs a cumulative value of PDSCH reception or SPS PDSCH release scheduled by DCI format 1_0 or DCI format 1_1 on specific cell c. This cumulative value is set based on the PDCCH monitoring occasion in which the scheduled DCI is present and the serving cell.

The total DAI is a value indicating the size of the HARQ-ACK codebook. Specifically, the value of total DAI means the total number of previously scheduled PDSCHs or SPS PDSCH releases including the time point at which the DCI is scheduled. Additionally, the total DAI is a parameter used when the HARQ-ACK information on serving cell c also includes HARQ-ACK information for the PDSCH scheduled on other cells including serving cell c in a carrier aggregation (CA) situation. In other words, the total DAI parameter is not present in a system operating with one cell.

An example of DAI operation above is shown in FIG. 5. In FIG. 5, when the UE configured with two carriers transmits the HARQ-ACK codebook selected based on the DAI over the PUCCH 520 in the nth slot of carrier 0 (502), the changing values of the counter DAI (C-DAI) and total DAI (T-DAI) indicated by the DCI detected at each PDCCH monitoring occasion configured for each carrier are shown. First, the DCI detected at m=0 (506) indicates that C-DAI and T-DAI each have a value of 1 (512). The DCI detected at m=1 (508) indicates that C-DAI and T-DAI each have a value of 2 (514). The DCI detected at m=2 (510) on carrier 0 (c=0, 502) indicates that C-DAI has a value of 3 (516). The DCI detected at m=2 (510) on carrier 1 (c=1, 504) indicates that C-DAI has a value of 4 (518). Here, if carriers 0 and 1 are scheduled at the same monitoring occasion, both T-DAIs are indicated as 4.

HARQ-ACK codebook determination depicted in FIGS. 4 and 5 operates under the condition that only one PUCCH including HARQ-ACK information is transmitted within one slot. This is called mode 1. As an example of determining a single PUCCH transmission resource in one slot, when PDSCHs scheduled by different DCIs are multiplexed into a single HARQ-ACK codebook and transmitted in the same slot, the PUCCH resource selected for HARQ-ACK transmission is determined to be the PUCCH resource indicated by the PUCCH resource field in the DCI that has scheduled the last PDSCH. That is, the PUCCH resource indicated by the PUCCH resource field indicated in the DCI scheduled prior to this DCI is ignored.

The following description defines a method and apparatus for determining a HARQ-ACK codebook in a situation where two or more PUCCHs including HARQ-ACK information can be transmitted in one slot. This is called mode 2. The UE may operate either in mode 1 (transmitting only one HARQ-ACK PUCCH in one slot) or in mode 2 (transmitting one or more HARQ-ACK PUCCHs in one slot). Alternatively, the UE supporting both mode 1 and mode 2 may be configured by the base station to operate in only one mode via higher signaling, or mode 1 or mode 2 may be implicitly determined by DCI format, RNTI, DCI specific field value, scrambling, or the like. For example, the PDSCH scheduled in DCI format A and HARQ-ACK information associated therewith are based on mode 1, and the PDSCH scheduled in DCI format B and HARQ-ACK information associated therewith are based on mode 2.

Whether the above-described HARQ-ACK codebook is semi-static as in FIG. 4 or dynamic as in FIG. 5 is determined by an RRC signal.

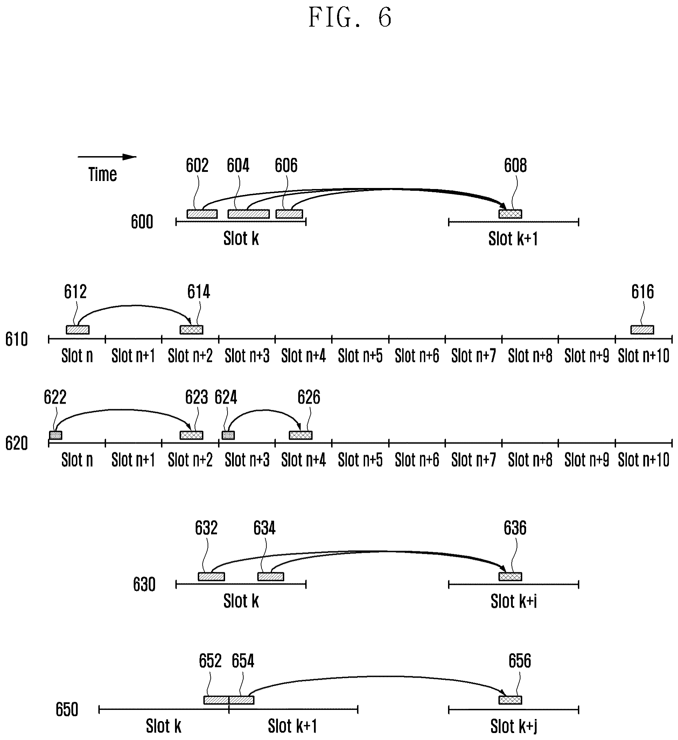

FIG. 6 is a diagram illustrating a HARQ-ACK transmission process for DL SPS.

In FIG. 6, indicia 600 indicates a situation where PDSCHs 602, 604 and 606 that are maximally receivable in slot k without overlapping in time resources are mapped. For example, if the DCI format scheduling the PDSCH does not include a PDSCH-to-HARQ feedback timing indicator, the UE transmits HARQ-ACK information 608 in slot k+1 according to the value of l set by higher-layer signaling. Therefore, the size of the semi-static HARQ-ACK codebook for slot k+1 will be equal to the maximum number of PDSCHs that can be transmitted in slot k, which is 3. Additionally, if each PDSCH has 1-bit HARQ-ACK information, the HARQ-ACK codebook at 608 in indicia 600 of FIG. 6 will be composed of 3 bits, [X, Y, Z], where X represents HARQ-ACK information for PDSCH 602, Y represents HARQ-ACK information for PDSCH 604, and Z represents HARQ-ACK information for PDSCH 606. If PDSCH reception is successful, the corresponding information will be mapped to an ACK, otherwise, a NACK. Additionally, if the corresponding DCI does not actually schedule a PDSCH, the UE reports a NACK. Specifically, the position of the HARQ-ACK codebook located according to the SLIV of the PDSCH that can be scheduled in the DCI may vary, and may be determined according to Table 7, pseudo code 1, or pseudo code 2. Indicia 610 of FIG. 6 indicates HARQ-ACK transmission in a situation where DL SPS is activated. Since the minimum periodicity of DL SPS is 10 ms in Rel-15 NR, and the length of one slot is 1 ms at 610 with the subcarrier spacing of 15 kHz, SPS PDSCH 612 will be transmitted in slot n, and then SPS PDSCH 616 will be transmitted in slot n+10.

For HARQ-ACK information corresponding to each SPS PDSCH, the SPS periodicity, HARQ-ACK transmission resource information, MCS table configuration, and the number of HARQ processes are notified through a higher-layer signal, and then frequency resources, time resources, and MCS values are notified according to the information contained in the DCI format indicating activation of the corresponding SPS. For reference, the PUCCH resource over which HARQ-ACK information is transmitted may also be configured by a higher signal, and the PUCCH resource has the following attributes.

- With or without hopping
- PUCCH format (start symbol, symbol length, etc.)

Here, the MCS table configuration and HARQ-ACK transmission resource information may be not present. If HARQ-ACK transmission resource information is present, Rel-15 NR supports PUCCH format 0 or 1, which may transmit up to 2 bits. However, later releases can also fully support PUCCH format 2, 3 or 4, which may transmit more than 2 bits.

Because the DL SPS higher-layer signal configuration includes HARQ-ACK transmission resource information, the UE may ignore the PUCCH resource indicator in the DCI format indicating DL SPS activation. Or, the PUCCH resource indicator field itself may be not present in the corresponding DCI format. On the other hand, if there is no HARQ-ACK transmission resource information in the DL SPS higher-layer signal configuration, the UE transmits HARQ-ACK information corresponding to the DL SPS over the PUCCH resource determined by the PUCCH resource indicator in the DCI format activating DL SPS. In addition, the difference between the slot in which the SPS PDSCH is transmitted and the slot in which the corresponding HARQ-ACK information is transmitted is determined by the value indicated by the PDSCH to HARQ-ACK feedback timing indicator in the DCI format that activates DL SPS, or if this indicator is not present, it follows a specific value preset by a higher-layer signal. For example, as indicated by indicia 610 in FIG. 6, if the PDSCH to HARQ-ACK feedback timing indicator is 2, HARQ-ACK information for SPS PDSCH 612 transmitted in slot n is transmitted over PUCCH 614 in slot n+2. Further, the PUCCH over which the HARQ-ACK information is transmitted may be configured by a higher-layer signal or the corresponding resource may be determined by an L1 signal indicating DL SPS activation. In addition, the position of the HARQ-ACK codebook transmitted over PUCCH 614 for SPS PDSCH 612 is position Y in [X Y Z], assuming that up to three PDSCHs can be received as indicated by indicia 600 of FIG. 6, and the time resource of PDSCH 612 is the same as that of PDSCH 604.

If a DCI indicating DL SPS release is transmitted, the UE should transmit HARQ-ACK information for the DCI to the base station. However, in the case of a semi-static HARQ-ACK codebook, the HARQ-ACK codebook size and its position are determined by the time resource region to which the PDSCH is allocated and the slot interval (PDSCH to HARQ-ACK feedback timing) between the PDSCH and HARQ-ACK indicated by an L1 signal or higher-layer signal as described in the disclosure. Hence, when transmitting the DCI indicating DL SPS release through a semi-static HARQ-ACK codebook, a specific rule is required rather than arbitrary location determination within the HARQ-ACK codebook; in Rel-15 NR, the position of HARQ-ACK information for the DCI indicating DL SPS release is mapped in the same manner as the transmission resource region of the corresponding DL SPS PDSCH. For example, indicia 620 of FIG. 6 illustrates a situation where DCI 622 indicating release of activated DL SPS PDSCH is transmitted in slot n. If the PDSCH to HARQ-ACK feedback timing indicator included in the DCI format corresponding to DCI 622 indicates 2, HARQ-ACK information corresponding to DCI 622 will be transmitted over PUCCH 623 in slot n+2; for the HARQ-ACK codebook position, assuming that pre-configured SPS PDSCH is scheduled in slot n, the UE maps HARQ-ACK information for DCI 622 indicating DL SPS release to the HARQ-ACK codebook position corresponding to SPS PDSCH for transmission. In this regard, the following two methods are possible, and the base station and UE will transmit and receive the corresponding DCI in at least one way depending on the standard or base station settings.

* Method 6-1-1: Transmitting a DCI indicating DL SPS release only in a slot where pre-configured SPS PDSCH is to be transmitted

For example, if SPS PDSCH is configured to be transmitted in slot n as indicated by indicia 620 of FIG. 6, the UE transmits DCI 622 indicating SPS PDSCH release only in slot n, and the slot in which HARQ-ACK information for this is transmitted is identical to the slot determined when assuming that SPS PDSCH is transmitted. In other words, when the slot in which HARQ-ACK information for SPS PDSCH is transmitted is n+2, the slot in which HARQ-ACK information for DCI indicating DL SPS PDSCH release is transmitted is also n+2.

* Method 6-1-2: Transmitting a DCI indicating DL SPS release in any slot regardless of the slot in which SPS PDSCH is transmitted.

For example, as indicated by indicia 620 of FIG. 6, when SPS PDSCH is transmitted in slots n, n+10, n+20,..., and the base station transmits DCI 624 indicating release of DL SPS PDSCH in slot n+3, if the value indicated by the PDSCH to HARQ-ACK feedback timing indicator included in the corresponding DCI is 1, or if the corresponding field is not present and the value preset by a higher signal is 1, HARQ-ACK information 626 for the DCI indicating DL SPS PDSCH release is transmitted and received in slot n+4.

There may be cases where the minimum DL SPS periodicity is shorter than 10ms. For example, if different devices in a factory wirelessly transmit data that requires high reliability and low latency, and the transmission periodicity for that data is fixed and short, the transmission periodicity should be shorter than current 10ms. So, the DL SPS transmission periodicity may be determined in units of slots, symbols, or symbol groups, regardless of the subcarrier spacing, rather than on a millisecond basis. For reference, the minimum transmission periodicity of uplink configured grant PUSCH resources is 2 symbols.

Indicia 630 of FIG. 6 illustrates a situation where the transmission periodicity of DL SPS is 7 symbols, which is shorter than the slot. Since the transmission periodicity is less than one slot, up to two SPS PDSCHs 632 and 634 may be transmitted in slot k. Also, the HARQ-ACK information corresponding to SPS PDSCH 632 and SPS PDSCH 634 is transmitted in a slot according to the value indicated by the PDSCH to HARQ-ACK feedback timing indicator included in the DCI indicating SPS activation, or, if this field is absent, the value preset by a higher-layer signal; for example, if this value is i, the UE transmits HARQ-ACK information 636 for SPS PDSCH 632 and SPS PDSCH 634 in slot k+i. The position of the HARQ-ACK codebook including the above HARQ-ACK information should be determined by considering not only the TDRA being time resource information in which the SPS PDSCH is scheduled but also the transmission periodicity. Previously, since only one SPS PDSCH could be transmitted per slot, the HARQ-ACK codebook position is determined based on the TDRA being time resource information without considering the transmission periodicity. However, if the DL SPS transmission periodicity is shorter than the slot, both the TDRA being time resource information and the transmission periodicity should be considered to determine the HARQ-ACK codebook position. Here, the TDRA stands for time domain resource allocation and includes the transmission start symbol and length information of the SPS PDSCH. For example, if the DL SPS transmission periodicity is 7 symbols, the start symbol of the DL SPS PDSCH determined by the TDRA is 2, and the length is 3, two DL SPS PDSCHs will be present in a single slot as indicated by indicia 630 in FIG. 6. In other words, first SPS PDSCH 632 is a PDSCH with OFDM symbol indices 2, 3 and 4 determined by the TDRA, and second SPS PDSCH 634 is a PDSCH with OFDM symbol indices 9, 10 and 11 determined by considering the TDRA and 7-symbol transmission periodicity. That is, the second SPS PDSCH in a slot will have the same length as the first SPS PDSCH, but the offset will be shifted by the transmission periodicity. In summary, for generation or determination of a semi-static HARQ-ACK codebook, to determine the HARQ-ACK codebook position for SPS PDSCHs in one slot, the UE uses time resource allocation information if the SPS PDSCH transmission periodicity is greater than one slot, and considers both the time resource allocation information and the SPS PDSCH transmission periodicity if the SPS PDSCH transmission periodicity is less than one slot.

When the SPS PDSCH transmission periodicity is shorter than one slot, the SPS PDSCH may cross the slot boundary depending on the combination of the transmission periodicity and TDRA. Indicia 650 of FIG. 6 illustrates this example, where the base station configures one SPS PDSCH crossing the slot boundary as PDSCH 652 and PDSCH 654, which are to be repeatedly transmitted. Here, PDSCH 652 and PDSCH 654 may always have the same length or different lengths. In addition, only one HARQ-ACK information 656 for the SPS PDSCH composed of PDSCH 652 and PDSCH 654 is transmitted by the UE, and the slot that serves as the reference is slot k+1 in which PDSCH 654 (last repeatedly transmitted) is transmitted.

In the disclosure, the UE does not expect to configure or receive DL SPS PDSCH time resource information beyond the DL SPS transmission periodicity, and if such a configuration or indication is received, the UE regards it as an error and ignores it.

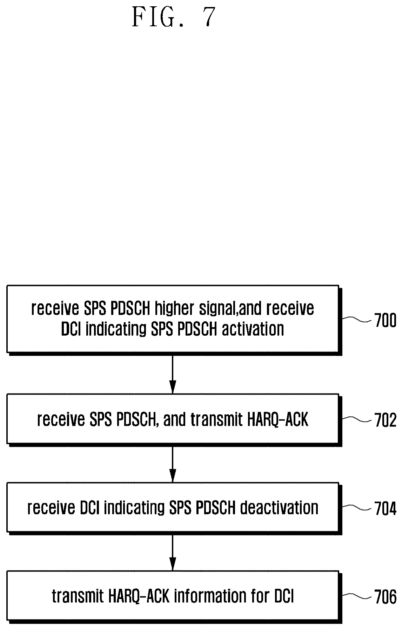

FIG. 7 is a diagram illustrating a process in which the UE transmits HARQ-ACK information based on a semi-static HARQ-ACK codebook for a DCI indicating SPS PDSCH deactivation.

The UE receives SPS PDSCH configuration information via a higher signal. Here, the information configured via the higher signal may include a transmission periodicity, an MCS table, and HARQ-ACK configuration information. After receiving the above higher signal, the UE receives a DCI activating SPS PDSCH from the base station (700). After receiving the DCI indicating activation, the UE periodically receives SPS PDSCH and transmits corresponding HARQ-ACK information (702). Thereafter, when there is no more downlink data to be periodically transmitted or received, the base station transmits a DCI indicating SPS PDSCH deactivation to the UE, and the UE receives this (704). The UE transmits HARQ-ACK information for the DCI indicating SPS PDSCH deactivation according to the SPS PDSCH transmission periodicity (706). For example, if the transmission periodicity is greater than one slot, the UE transmits HARQ-ACK information for the DCI indicating SPS PDSCH deactivation by including it in the HARQ-ACK codebook position for the HARQ-ACK information corresponding to SPS PDSCH. Transmission of HARQ-ACK information will be possible by using at least one of method 6-1-1 or method 6-1-2 described in FIG. 6. If the transmission periodicity is less than one slot, the UE may transmit HARQ-ACK information for DCI information indicating SPS PDSCH deactivation by using at least one of methods 6-2-1 to 6-2-5. The above descriptions in FIG. 7 apply to cases where the UE has received a semi-static HARQ-ACK codebook from the base station in advance via a higher signal. Additionally, the above descriptions in FIG. 7 may be applied only to cases where the UE has been configured in advance to allow only one HARQ-ACK transmission per slot via a higher signal or standard or UE capability.

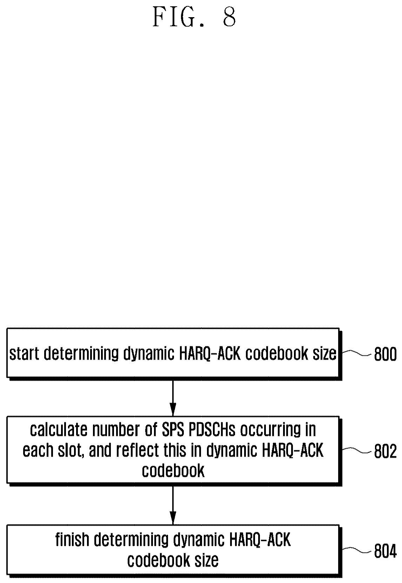

FIG. 8 is a diagram illustrating a method for the UE to determine a dynamic HARQ-ACK codebook for SPS PDSCH reception.

If the UE has been configured in advance to operate with a dynamic HARQ-ACK codebook via a higher signal, the UE begins determining the HARQ-ACK codebook size for HARQ-ACK information to be transmitted in a specific slot (800). The UE calculates not only the HARQ-ACK codebook size for dynamically scheduled PDSCHs but also the total number of SPS PDSCHs generated in a slot corresponding to the slot in which HARQ-ACK information is to be transmitted, and reflects these in the HARQ-ACK codebook size (802). The UE may configure a dynamic HARQ-ACK codebook by utilizing at least one of pseudo-code 1 or pseudo-code 2 described above. Thereafter, the UE completes HARQ-ACK codebook size determination (804), and transmits HARQ-ACK information in the corresponding slot. Also, the above descriptions in FIG. 8 may be applied only when the UE has been configured in advance to allow only one HARQ-ACK transmission per slot through a higher signal, standard, or UE capability. For reference, when a single SPS PDSCH is repeatedly transmitted across the slot boundary as indicated by indicia 650 in FIG. 6, for determining a dynamic HARQ-ACK codebook, the UE determines the HARQ-ACK codebook size based on the slot in which the SPS PDSCH is last repeatedly transmitted. Specifically, SPS PDSCH 652 is transmitted in slot k as indicated by indicia 650 of FIG. 6, but the UE does not consider this to count the number of valid SPS PDSCHs for determining the dynamic HARQ-ACK codebook size, and determines the dynamic HARQ-ACK codebook size in consideration of SPS PDSCH 654 transmitted in slot k+1. In addition, when determining the number of SPS PDSCHs per slot (k) for determining the dynamic HARQ-ACK codebook size in a specific slot in pseudo-code 2, the number of valid SPS PDSCHs is calculated for the slot (or end slot) to which the end symbol of the last SPS PDSCH among the repeatedly transmitted SPS PDSCHs belongs.

As previously explained, periodic data transmission and reception refers to the operation of transmitting and receiving data at a regular interval. As previously described, periodic data transmission and reception refers to the operation of transmitting and receiving data at a constant periodicity. The periodicity may be in units of slots, symbols, frames, or subframes, and the periodicity value is usually a natural number, but may also be an integer (or rational number) depending on the specific situation. A periodicity with a natural number refers to a periodicity of 2 symbols, 1 slot, or 10 milliseconds. A periodicity with an integer (or rational number) specifically refers to a periodicity of a positive integer (or rational number) such as 2.1 symbols, 1.4 slots, or 10.3 milliseconds. An example of a situation requiring a periodicity of a positive integer may be a data transmission/reception periodicity for media information, such as 60 frames per second (fps) or 120 fps. 60 fps means that 60 frames are transmitted and received periodically per second; when converted to milliseconds (ms), this is a rational number of 16.66666... ms, or 16.67ms when rounded at the third decimal place. 120 fps means that 120 frames of information are transmitted and received periodically per second; when converted to milliseconds, this is a rational number of 8.33333... ms, or 8.33 ms when rounded at the third decimal place. Hence, if 60 fps or 120 fps described above is based on the frame structure defined in 5G NR, the periodicity as shown in Table 8 below will be required.

[Table 8]

| SCS | 1 slot (ms) | 1 symbol (ms) | 1000/60/1 symbol | 1000/120/1 symbol |
|---|---|---|---|---|
| 15 | 1 | 0.071428571 | 233.33 | 116.67 |
| 30 | 0.5 | 0.035714286 | 6533.33 | 3266.67 |
| 60 | 0.25 | 0.017857143 | 365866.67 | 182933.33 |
| 120 | 0.125 | 0.008928571 | 40977066... | 20488533... |
| 240 | 0.0625 | 0.004464286 | 9.18E+09... | 4.59E+09... |

In Table 8, in the cases of 120 kHz and 240 kHz, values are not accurately expressed down to the decimal point due to their large values, but both require a periodicity of a decimal value at the symbol level. However, introducing a new symbol or slot structure to support a traffic periodicity of 60 fps or 120 fps may require a different approach based on the existing 5G NR architecture, as it may alter the existing 5G NR architecture or impact other functions. The following description describes these schemes in detail. Additionally, while the following description primarily focuses on DL SPS, it can be equally applied to UL CG.

For both DL SPS and UL CG, HARQ ID assignment should be determined in advance because there is no dynamic signal, such as DCI, for periodic data transmission. This allows the UE to determine which data is being retransmitted using the HARQ ID when the base station instructs retransmission for periodic data transmission with a dynamic signal. For DL SPS, it may be possible to determine the HARQ ID according to Equation 1 below.

HARQ Process ID = [floor (CURRENT_slot × 10 / (numberOfSlotsPerFrame × periodicity))] modulo nrofHARQ-Processes + harq-ProcID-Offset

[Equation 1]

In Equation 1 above, CURRENT_slot = [(SFN × numberOfSlotsPerFrame) + slot number in the frame], where SFN stands for system frame number indicating the frame index and has a length of 10ms. numberOfSlotsPerFrame refers to the number of slots included in a frame. The number of slots varies depending on the subcarrier spacing, and numberOfSlotsPerFrame = 10 * 2$^a$. Here, 'a' has different values depending on the subcarrier spacing; a = 0, 1, 2, 3, 4, 5, and 6 respectively for 15kHz, 30kHz, 60kHz, 120kHz, 240kHz, 480kHz, and 960kHz. "Slot number in the frame" refers to the index of the slot within the frame where the DL SPS resource is allocated. "Periodicity" refers to the transmission/reception period between successive DL SPS resources and may be set to a value between 1 slot and 5120 slots. harq-ProcID-Offset may be set or not set. When harq-ProcID-Offset is set, it takes a value between 0 and nrofHARQ-Processes. The nrofHARQ-Processes value may be set up to a maximum of 16 or 32. CURRENT_slot refers to the index of the slot where the first transmission resource among the bundled DL SPS resources is allocated. nrofHARQ-Processes may be applied to limit the range of HARQ process numbers used by DL SPS. As an overlap or collision may occur when multiple DL SPSs use HARQ process numbers between resources, harq-ProcID-Offset can be applied to utilize different ranges of HARQ process numbers.

For UL CG, it may be possible to determine the HARQ ID according to Equation 2 below.

HARQ Process ID = [floor(CURRENT_symbol/periodicity)] modulo nrofHARQ-Processes + harq-ProcID-Offset2

[Equation 2]

In Equation 2 above, CURRENT_symbol = (SFN × numberOfSlotsPerFrame × numberOfSymbolsPerSlot + slot number in the frame × numberOfSymbolsPerSlot + symbol number in the slot), where SFN and numberOfSlotsPerFrame are the same as those described in Equation 1. NumberOfSymbolsPerSlot indicates the number of symbols in a slot, and is 14 symbols for the normal cyclic prefix (NCP) and is 12 symbols for the extended cyclic prefix (ECP). Either NCP or ECP may be configured in advance via a higher signal. "Slot number in the frame" indicates the slot number to which the UL CG resource is allocated within the frame. "Symbol number in the slot" refers to the symbol number of the first UL CG in the slot where UL CG resources are allocated. "Periodicity" refers to the transmission/reception period between successive UL CG resources and may be set to a value between 2 symbols and 5120 slots. harq-ProcID-Offset2 may be set or not set. When harq-ProcID-Offset2 is set, it takes a value between 0 and nrofHARQ-Processes. The nrofHARQ-Processes value may be set up to a maximum of 16 or 32. CURRENT_symbol represents the index of the symbol assigned to the first transmission resource among the UL CG bundled resources. nrofHARQ-Processes can be applied to limit the range of HARQ process numbers used by UL CG. As an overlap or collision may occur when HARQ process numbers are used between multiple UL CG resources, harq-ProcID-Offset2 may be applied to utilize different ranges of HARQ process numbers between multiple UL CGs.

[First Embodiment]

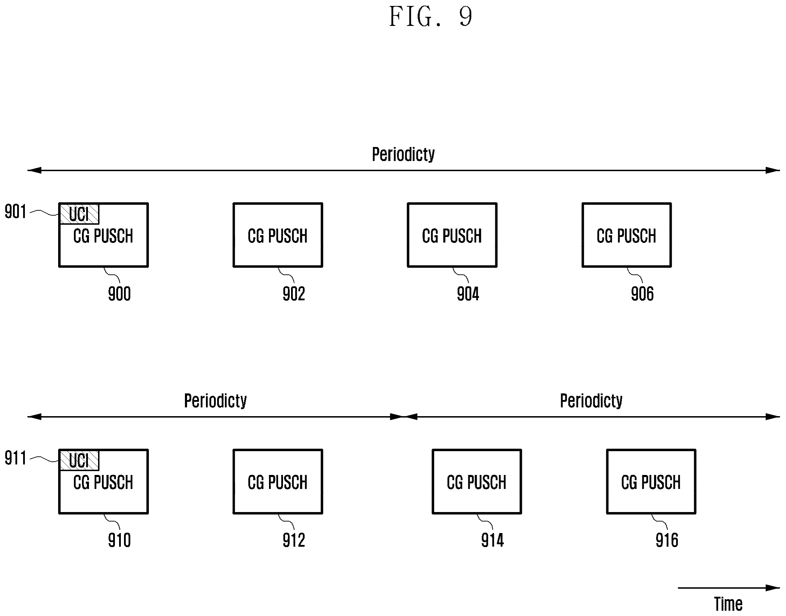

FIG. 9 is a diagram illustrating a method for transmitting UL CG usage information according to an embodiment.

UL CG usage information may be transmitted in the form of UCI 901 or 911 by being included in CG PUSCH 900 or 910. The PUSCHs in FIG. 9 are all CG PUSCHs and may be configured solely via a higher signal or via a combination of a higher signal and L1 signal. CG PUSCHs 900, 902, 904 and 906 are CG PUSCHs belonging to one periodicity and are repeated in each periodicity. CG PUSCHs 910 and 912 are CG PUSCHs belonging to one periodicity and may be the same as CG PUSCHs 914 and 916 belonging to the next periodicity in terms of frequency resource size, time resource size, and MCS. That is, CG PUSCH 910 has the same frequency resource size, time resource size, and MCS as CG PUSCH 914, and CG PUSCH 912 has the same frequency resource size, time resource size, and MCS as CG PUSCH 916.

In related-art UL CGs, if a UE has data to transmit over resources periodically configured by the base station, the UE may transmit data via the corresponding UL CG resource. However, as it is unclear when the UE will use UL CG resources for transmission, the base station has the disadvantage of having to perform a blind search to determine whether the UE is transmitting data. Hence, if the base station can receive information from the UE regarding which UL CG resources will be used and which will not be used for a specific periodicity, the base station may be able to use the UL CG resources not used by the UE for other UEs. This information (hereinafter, UL CG usage information) may be transmitted to the base station via uplink control information (UCI) when the UE transmits a specific UL CG. For example, as shown in FIG. 9, UL CG usage information may be included in UCI 901 or 911 being transmitted via CG PUSCH 900 or 910. Alternatively, UL CG usage information may be multiplexed with HARQ-ACK information and CSI information and be transmitted. Alternatively, it may be possible to apply the same channel encoding and demodulation scheme as the HARQ-ACK information to the UL CG usage information.

The UL CG usage information may include only information on which UL CG resources are not in use, only information on which UL CG resources are to be used, or both. Alternatively, the UL CG usage information may be information indicating a specific UL CG resource within a specific periodicity. In this case, the UL CG usage information may indirectly indicate all UL CGs included in a section from the first symbol of the specific UL CG resource to the end of the specific periodicity as UL CG resources not to be used by the UE. The specific periodicity may refer to a single UL CG transmission periodicity, multiple UL CG transmission periodicities, or a periodicity value indicated through a separate higher signal configuration. For example, in FIG. 9, if the UL CG usage information included in UCI 901 indicates CG PUSCH 904, CG PUSCH 904 and CG PUSCH 906 may be indicated as UL CG resources not to be used by the UE. As another example, in FIG. 9, if the UL CG usage information included in UCI 911 indicates CG PUSCH 912, it may be possible for CG PUSCH 912, CG PUSCH 914, and CG PUSCH 916 to be indicated as UL CG resources not to be used by the UE.

Alternatively, the UL CG usage information may indicate a specific UL CG resource within a specific periodicity. In this case, the UL CG usage information may indirectly indicate all UL CGs included in a section after the last symbol of the specific UL CG resource until the end of the specific periodicity as UL CG resources not to be used by the UE. For example, in FIG. 9, if the UL CG usage information included in UCI 901 indicates CG PUSCH 904, CG PUSCH 906 may be indicated as an UL CG resource not to be used by the UE. As another example, in FIG. 9, if the UL CG usage information included in UCI 911 indicates CG PUSCH 912, it may be possible for CG PUSCH 914 and CG PUSCH 916 to be indicated as UL CG resources not to be used by the UE.

Alternatively, the UL CG usage information may be in the form of bitmap information, indicating which UL CG resources are being used or not. For example, in FIG. 9, the UL CG usage information included in UCI 901 may be is composed of a bitmap with three bits, and this bitmap may indicate the usage of three CG PUSCHs among the four CG PUSCHs within a single periodicity excluding the CG PUSCH on which the UL CG usage information is transmitted. For example, for 3 bits of the bitmap, if the bit value of 1 indicates 'use' and the bit value of 0 indicates 'not use', when the bitmap is set to "101", this bitmap may indicate that CG PUSCH 904 is an UL CG resource not to be used by the UE.

Alternatively, the UL CG usage information may notify specific section information, which indicates whether the UL CG resources included in the corresponding section are used or not used. For example, in FIG. 9, if the UL CG usage information is information indicating a specific point in time and a length at that point in time, and the CG PUSCHs included in the corresponding section are CG PUSCH 904 and CG PUSCH 906, the UE may indicate through the UL CG usage information that CG PUSCH 904 and CG PUSCH 906 are UL CG resources not to be used.

Alternatively, the UL CG usage information may indicate UL CG resources not to be used by the UE, either discontinuously or continuously, within a specific section. As an example described above, when the bitmap scheme is used, it may be possible to indicate discontinuous UL CG resources not to be used by the UE.

In the above description, the usage of UL CG resources means that the UE transmits a TB through the corresponding UL CG resources, while the non-usage of UL CG resources means that the UE does not transmit a TB through the corresponding UL CG resources. TB (or MAC PDU) generation is determined by the MAC entity, and the MAC entity may determine whether to or not to generate a TB (or MAC PDU) by checking the UL CG usage information.

The UL CG usage information may be transmitted by being included in UL CG transmission in the form of CG-UCI. Alternatively, the UL CG usage information may be transmitted over the first CG UL resource configured within a single UL CG periodicity or the first UL CG resource actually transmitted by the UE. For example, in FIG. 9, the UL CG usage information may always be transmitted over CG PUSCH 900, which is the first CG PUSCH configured within a single CG PUSCH periodicity. Alternatively, the UL CG usage information may be transmitted over the first CG PUSCH actually transmitted by the UE within a single CG PUSCH periodicity. In this case, the first CG PUSCH that the UE can transmit is determined based on the redundancy version (RV) value. For example, if RV is set to {0, 0, 0, 0}, the UL CG usage information may be transmitted over CG PUSCH 900, CG PUSCH 902, CG PUSCH 904, or CG PUSCH 906.

Alternatively, the UL CG usage information may be transmitted over the first CG UL resource configured within multiple UL CG periodicities or the first UL CG resource actually transmitted by the UE. For example, in FIG. 9, the UL CG usage information may be transmitted over CG PUSCH 910 being first configured within multiple CG PUSCH periodicities. Alternatively, it may be transmitted over the first CG PUSCH actually transmitted by the UE within multiple CG PUSCH periodicities. In this case, the first CG PUSCH that the UE can transmit is determined based on the redundancy version (RV) value. For example, if RV is set to {0, 0, 0, 0}, the UL CG usage information may be transmitted over CG PUSCH 910, CG PUSCH 912, CG PUSCH 914, or CG PUSCH 916.

Alternatively, the UL CG usage information may be transmitted only over specific candidate UL CG resources configured by a higher signal. For example, in FIG. 9, if CG PUSCHs capable of transmitting UL CG usage information within one or more CG periodicities are designated as 900, 904, 910, and 914 by higher signal settings, the UE may be able to transmit UL CG usage information only over each corresponding CG PUSCH.

Alternatively, within the section (or, set of candidate CG PUSCHs) indicated by the UL CG usage information, it may be possible to transmit the UL CG usage information over only one CG PUSCH. That is, within the section (or, the set of candidate CG PUSCHs) indicated by the UL CG usage information, transmission of the UL CG usage information over two or more CG PUSCHs may be not permitted.

Multiple UL CGs within a single periodicity may have the same frequency resources, time resources, and MCS, or may differ in at least one thereof. Multiple UL CGs within a single periodicity may be resources for repetitive transmission of the same TB or resources for transmission of different TBs. For example, in FIG. 9, it is possible for CG PUSCHs 900, 902, 904 and 906 present within one CG periodicity to all have the same frequency resources, time resources, and MCS, or it is possible for at least one of CG PUSCHs 900, 902, 904 and 906 to have different frequency resources, time resources, or MCS values.

Meanwhile, although the UE is scheduled with a DG PUSCH or CG PUSCH, if there are no MAC PDUs generated from the MAC entity, it is possible for the UE not to transmit the DG PUSCH or CG PUSCH. This is called uplink skipping. However, PUCCHs including UCI such as CSI or HARQ-ACK may overlap with DG (dynamic grant) PUSCH scheduled by DCI, with CG PUSCH, or with both DG PUSCH and CG PUSCH. If the UE transmits or does not transmit a DG PUSCH or CG PUSCH overlapping with the PUCCH due to uplink skipping, the UE may transmit the UCI over either the PUCCH or the PUSCH, in which case the base station may be burdened with a blind search for both the PUCCH and the PUSCH. Hence, even if the UE is provided with uplink skipping settings, it may generate a MAC PDU if the DG PUSCH or CG PUSCH overlaps with the PUCCH. Consequently, it is possible for the UCI to always be transmitted by being included in the DG PUSCH or CG PUSCH.

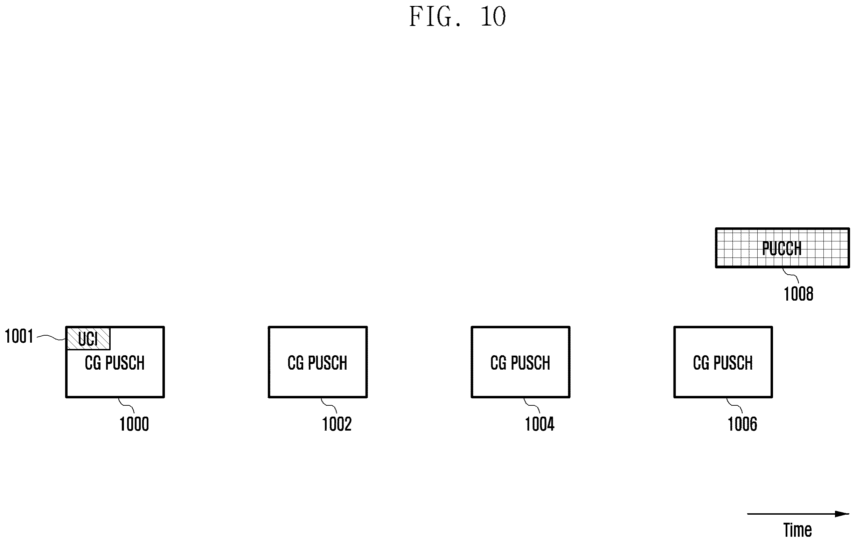

In a situation where the UE indicates not to use specific CG PUSCH resource configuration information through the UL CG usage information, it is possible that at least one symbol of the corresponding CG PUSCH overlaps with a PUCCH including HARQ-ACK or CSI information. FIG. 10 is a diagram illustrating a situation where CG PUSCH and PUCCH overlap according to an embodiment. Specifically, in FIG. 10, when CG PUSCHs 1000, 1002, 1004 and 1006 are configured, and UL CG usage information is transmitted from the UE to the base station via UCI 1001 included in CG PUSCH 1000, this UL CG usage information may designate CG PUSCH 1006 as a resource not to be used by the UE. In this situation, it is possible that CG PUSCH 1006 overlaps with PUCCH 1008 including HARQ-ACK information or CSI information at least in terms of time resources. These PUCCH and CG PUSCH may be present in the same cell or in different cells. In this case, the UE may be able to utilize at least one of the following methods or a combination thereof.

Method A-1: The UE does not transmit the CG PUSCH indicated as "unused", and transmits UCI such as HARQ-ACK information or CSI information over the PUCCH. Hence, in FIG. 10, the UE does not transmit CG PUSCH 1006 but transmit PUCCH 1008. Additionally, it is possible for the UE MAC to consider, for example, operations such as those in Table 9 below.

[Table 9]

| |
|---|
| 1> if the MAC entity is configured with *unusedCGPUSCH* with value *true* and the grant indicated to the HARQ entity is a configured uplink grant:<br>2> if the configured uplink grant is indicated as unused; and<br>2> if there is no aperiodic CSI requested for this PUSCH transmission as specified in TS 38.212 [9]; and<br>2> if the MAC PDU includes zero MAC SDUs; and<br>2> if the MAC PDU includes only the periodic BSR and there is no data available for any LCG, or the MAC PDU includes only the padding BSR:<br>3> not generate a MAC PDU for the HARQ entity. |

In [Table 9], unusedCGPUSCH is higher signal information related to applying UL CG usage information. Only when this higher signal information is provided, the UE is allowed to provide the base station with information on the usage of a specific CG PUSCH of the UE as described above in FIGS. 9 and 10. If the corresponding higher signal information is provided and a specific CG PUSCH is indicated as unused by the UCI including the UL CG usage information in FIGS. 9 and 10 (i.e., "if the configured uplink grant is indicated as unused" in Table 9), the UE is allowed not to generate a MAC PDU for the corresponding CG PUSCH. Therefore, the UE may not generate a MAC MPU for the corresponding CG PUSCH if the CG PUSCH is indicated as unused by the UL CG usage information, without having to consider whether the CG PUSCH overlaps with a PUCCH. Method A-2: Although a CG PUSCH is indicated as unused, if this CG PUSCH overlaps with a PUCCH, the UE may transmit the UCI contained in the PUCCH by piggybacking it on the CG PUSCH. Hence, in FIG. 10, it is possible for the UE to transmit CG PUSCH 1006 and not transmit PUCCH 1008. Additionally, it is possible for the UE MAC to consider, for example, operations such as those in Table 10 below.

[Table 10]

1> if the MAC entity is configured with *enhancedSkipUplinkTxDynamic* with value *true* and the grant indicated to the HARQ entity was addressed to a C-RNTI, or if the MAC entity is configured with *enhancedskipUplinkTxConfigured* with value *true* and the grant indicated to the HARQ entity is a configured uplink grant, or if the MAC entity is configured with *unusedCGPUSCH* with value *true* and the grant indicated to the HARQ entity is a configured uplink grant:

2> if the configured uplink grant is indicated as unused; and

2> if there is no UCI to be multiplexed on this PUSCH transmission as specified in TS 38.213 [6]; and

2> if there is no aperiodic CSI requested for this PUSCH transmission as specified in TS 38.212 [9]; and

2> if the MAC PDU includes zero MAC SDUs; and

2> if the MAC PDU includes only the periodic BSR and there is no data available for any LCG, or the MAC PDU includes only the padding BSR:

3> not generate a MAC PDU for the HARQ entity.

According to Table 10 above, if CG PUSCH 1006 is indicated as unused and overlaps with a PUCCH (or, if there is a UCI to be multiplexed to CG PUSCH 1006), the UE generates a MAC PDU for CG PUSCH 1006. If CG PUSCH 1006 is indicated as unused and does not overlap with a PUCCH (or, if there is no UCI to be multiplexed to CG PUSCH 1006), the UE does not generate a MAC PDU for CG PUSCH 1006. Method A-3: Depending on whether PUCCH 1008 is a DG PUCCH or a CG PUCCH, method A-1 or A-2 may be determined. The reason for distinguishing between DG PUCCH and CG PUCCH is that, with CG PUCCH, the UE can identify the presence of CG PUCCH resources before determining whether the CG PUSCH is unused. However, with DG PUCCH, the DG PUCCH resources may be not present at the time the UE determines whether the CG PUSCH is unused. For reference, DG PUCCH refers to a PUCCH resource scheduled by DCI, and HARQ-ACK information may correspond to this. CG PUCCH is a periodically configured PUCCH resource, and CSI or SR information may correspond to this. For example, for DG PUCCH, it is possible to use method A-1, and for CG PUCCH, it is possible to use method A-2. Alternatively, for DG PUCCH, method A-2 may be used, and for CG PUCCH, method A-1 may be used. Alternatively, for a CG PUSCH resource overlapping with CG PUCCH, it is possible to always indicate that the UE uses the corresponding CG PUSCH resource, through the UL CG resource usage information.

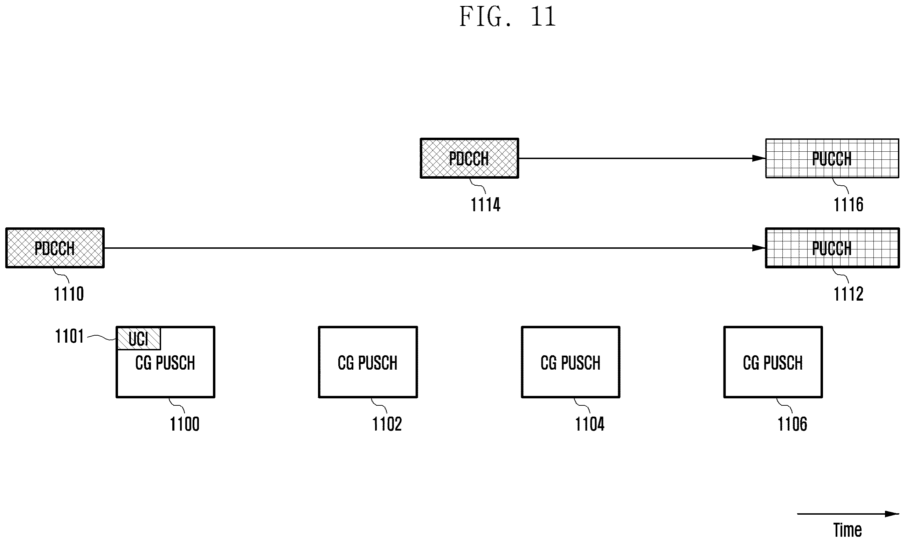

Method A-4: If PUCCH 1008 is a DG PUCCH, it is possible to determine method A-1 or A-2 by comparing the chronological order between the scheduling time of the DG PUCCH and the transmission time of the CG PUSCH including UL CG resource usage information. FIG. 11 is a diagram illustrating a situation where CG PUSCH and DG PUCCH overlap, according to an embodiment. When DG PUCCH overlaps with CG PUSCH 1106, the time at which the PDCCH scheduling the DG PUCCH is transmitted or received may be either earlier or later than the time at which UCI 1101 including resource usage information for CG PUSCH 1106 is transmitted or received. For example, if PDCCH 1110 scheduling DG PUCCH 1112 precedes CG PUSCH 1100 including UCI 1101 (or, if the start or last symbol of PDCCH 1110 precedes the start or last symbol of CG PUSCH 1100), the UE may apply method A-1 (or A-2). As another example, if PDCCH 1114 scheduling DG PUCCH 1116 is later than CG PUSCH 1100 including UCI 1101 (or, if the start or last symbol of PDCCH 1114 is later than the start or last symbol of CG PUSCH 1100), the UE may apply method A-2 (or A-1). In the above description, the order of time in the first or last symbol between PDCCH 1110 or PDCCH 1114 and CG PUSCH 1100 is considered from a time resource perspective. Generalizing this, the UE may apply method A-1 (or A-2) only if the last symbol of PDCCH 1110 precedes the first symbol of CG PUSCH 1100 by X symbols. Otherwise, the UE may apply method A-2 (or A-1). This is because the time point at which the UE determines whether to generate UL CG resource usage information included in the UCI may precede the time point at which the CG PUSCH including the UCI is transmitted. Hence, only when the DG PUCCH is scheduled by the PDCCH prior to the determination point in time, the UE may check the presence of the DG PUCCH and generate UL CG resource usage information correspondingly. The X symbol value may be fixed to one value or determined to be different values depending on the UE capability. If the UE reports multiple values, the base station may configure one value to the UE. Alternatively, if PDCCH 1110 is received X symbols earlier than CG PUSCH 1100 including UCI about UL CG resource usage information and hence the UE is aware of PUCCH resource 1112 in advance, at least for CG PUSCH 1106 that overlaps with corresponding PUCCH 1112, the UE may report to the base station that CG PUSCH resources 1106 are used when transmitting UL CG resource usage information.

[Second Embodiment]

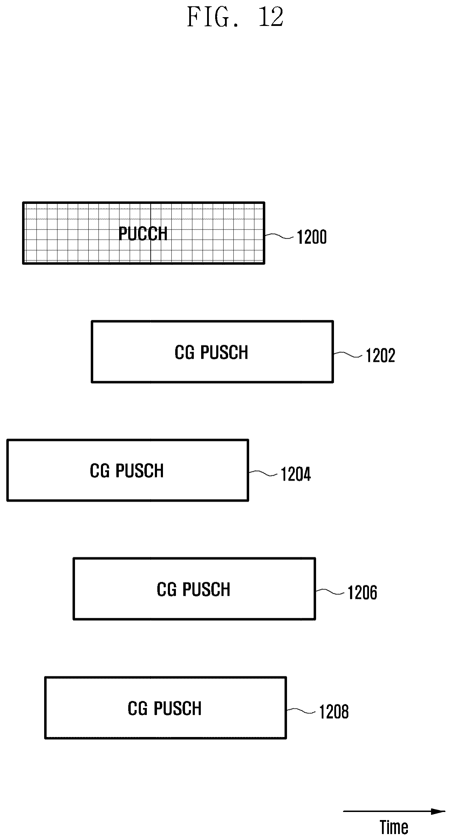

In the previous embodiment, a case is considered where there is only one CG PUSCH overlapping with a PUCCH. However, if the UE is configured with multiple cells or multiple CG PUSCHs can be configured in a single cell, there may be cases where two or more CG PUSCHs overlap with a single PUCCH. FIG. 12 is a diagram illustrating a situation where a PUCCH and multiple CG PUSCHs overlap, according to an embodiment. If higher configuration information related to UL CG resource usage information is not provided for all CG PUSCH resources, the UE may select a CG PUSCH to be used to transmit the UCI included in the PUCCH. For example, in FIG. 12, the UE may transmit the UCI included in PUCCH 1200 by piggybacking it on CG PUSCH 1202, CG PUSCH 1204, CG PUSCH 1206, or CG PUSCH 1208. If higher configuration information related to UL CG resource usage information is provided for CG PUSCH resources, and if the UE informs the base station that it uses CG PUSCH resources of some CG PUSCH resource sets and informs the base station that it does not use CG PUSCH resources of other CG PUSCH resource sets, the UE may avoid piggybacking the UCI included in the PUCCH at least on the CG PUSCHs indicated as unused. As an example, with reference to FIG. 12, if the UE reports CG PUSCH 1202 and CG PUSCH 1204 as unused CG PUSCH resources by using UL CG resource usage information, the UE may select at least one of CG PUSCH 1206 or CG PUSCH 1208 and transmit the UCI included in PUCCH 1200 by piggybacking it on the selected one. Here, the UL CG resource usage information may be a single instance or multiple instances. When there are multiple instances of UL CG resource usage information, this means that the UL CG resource usage information is provided for each CG PUSCH configuration. The above-described operation may be applied only when the corresponding PUCCH is a CG PUCCH; or, if the corresponding PUCCH is a DG PUCCH, it may be applied only when the scheduling time of the DG PUCCH precedes the transmission time of the CG PUSCH including the UL CG resource usage information by at least X symbols. If all CG PUSCHs overlapping with the PUCCH are indicated as unused by UL CG resource usage information, the UE may transmit the UCI over the PUCCH, or, as in the case where higher signal configuration information related to the UL CG resource usage information is not provided, the UE may select at least one CG PUSCH among all CG PUSCHs overlapping with the PUCCH and transmit the UCI by piggybacking it on the selected CG PUSCH.

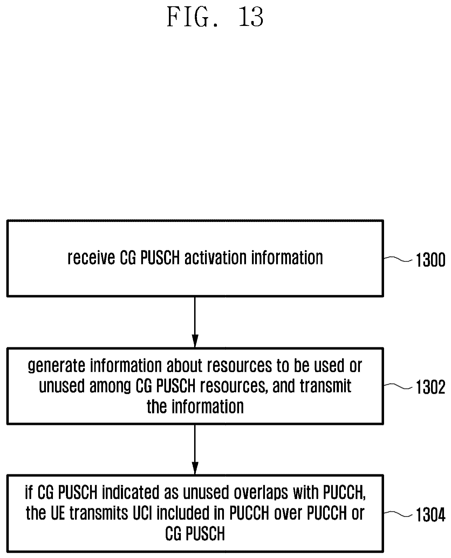

FIG. 13 is a flowchart illustrating UE operations in a situation where CG PUSCH and PUCCH overlap according to an embodiment. The UE first receives configuration information related to CG PUSCH resources (1300). This information may be provided solely by a higher signal or by a combination of a higher signal and an L1 signal. The types of related information may include at least one of frequency resource allocation information, time resource allocation information, periodicity information, information on whether different TBs may be transmitted within the periodicity, MCS information, RV information, repetitive transmission information, uplink beam information, uplink transmission power information, or UL CG resource usage information (e.g., information on the CG PUSCH position where this information is transmitted, information on the set of candidate CG PUSCHs indicated by this information, size of this information, transmission periodicity of this information). If information regarding the UL CG resource usage is provided by a higher signal, the UE includes, in the UCI, information about the CG PUSCH resources to be used or unused belonging to the candidate CG PUSCH resource sets within one or multiple CG PUSCH periodicities, piggybacks the above information on a specific CG PUSCH, and transmits it to the base station (1302). If the CG PUSCH indicated as unused by the above information overlaps with the PUCCH, the UE may transmit the UCI included in the PUCCH over the PUCCH or over a specific CG PUSCH by applying at least one of the methods described above in the first or second embodiment (1304).

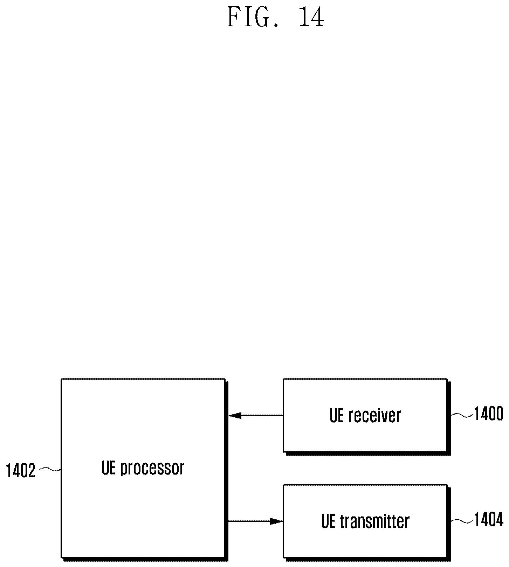

FIG. 14 is a block diagram illustrating the structure of a UE capable of carrying out embodiments of the disclosure.

With reference to FIG. 14, the UE of the disclosure may include a UE receiver 1400, a UE transmitter 1404, and a UE processor 1402. The UE receiver 1400 and the UE transmitter 1404 may be collectively referred to as a transceiver in the embodiment. The transceiver may transmit and receive signals to and from a base station. The signal may include control information and data. To this end, the transceiver may be composed of an RF transmitter that up-converts and amplifies the frequency of a signal to be transmitted, and an RF receiver that low-noise amplifies and down-converts the frequency of a received signal. Additionally, the transceiver may receive a signal via a radio channel and output it to the UE processor 1402, and may transmit a signal output from the UE processor 1402 via a radio channel. The UE processor 1402 may control a series of processes so that the UE may operate according to the above-described embodiments.

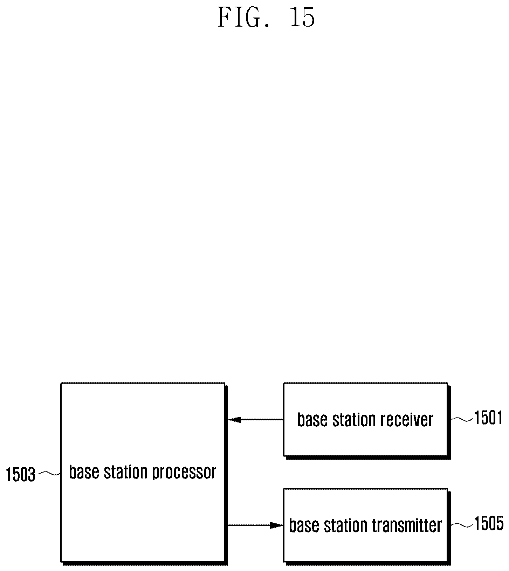

FIG. 15 is a block diagram illustrating the structure of a base station capable of carrying out embodiments of the disclosure.

With reference to FIG. 15, in an embodiment, the base station may include at least one of a base station receiver 1501, a base station transmitter 1505, or a base station processor 1503. The base station receiver 1501 and the base station transmitter 1505 may be collectively referred to as a transceiver in the embodiment of the disclosure. The transceiver may transmit and receive signals to and from a UE. The signal may include control information and data. To this end, the transceiver may be composed of an RF transmitter that up-converts and amplifies the frequency of a signal to be transmitted, and an RF receiver that low-noise amplifies and down-converts the frequency of a received signal. Additionally, the transceiver may receive a signal via a radio channel and output it to the base station processor 1503, and may transmit a signal output from the base station processor 1503 via a radio channel. The base station processor 1503 may control a series of processes so that the base station may operate according to the above-described embodiments.

Meanwhile, the order of description in the drawings illustrating the method of the disclosure does not necessarily correspond to the order of execution, and the order of precedence may be changed or the operations may be executed in parallel. Or, in the drawings illustrating the method of the disclosure, some components may be omitted and only some components may be included within a scope that does not harm the subject matter of the disclosure.

Although the disclosure primarily describes UE operations for SPS PDSCH, it may be equally applicable to grant-free PUSCH (or, configured grant type 1 and type 2).

In addition, the method of the disclosure may be implemented by combining some or all of the contents included in each embodiment within a scope that does not harm the subject matter of the disclosure.

Meanwhile, the embodiments of the disclosure disclosed in this specification and drawings are specific examples to easily explain the technical content of the disclosure and facilitate understanding thereof, and are not intended to limit the scope of the disclosure. In other words, it will be apparent to those skilled in the art that other modifications based on the technical concepts of the disclosure can be carried out. Further, the above embodiments may be carried out in combination as needed. For example, parts of multiple embodiments of the disclosure may be combined to operate a base station and a UE. For instance, the first and second embodiments of the disclosure may be combined to operate a base station and a UE. In addition, although the above embodiments have been presented based on the NR system, other modifications based on the technical ideas of the above embodiments may be implemented in other systems such as FDD or TDD LTE systems.

Further, this specification and drawings disclose preferred embodiments of the disclosure. Although specific terms are used, they are used in a general sense to facilitate easy explanation of the technical content of the disclosure and aid understanding, and are not intended to limit the scope of the disclosure. It will be apparent to those skilled in the art that other modifications based on the technical idea of the disclosure in addition to the embodiments disclosed herein can be carried out.

**Claims**

1. A method of a terminal in a communication system, the method comprising:

   receiving configuration information related to an uplink (UL) configured grant (CG) from a base station;
   identifying a plurality of CG physical uplink shared channels (PUSCHs) based on the configuration information;
   determining whether to transmit each of a plurality of CG PUSCHs; and
   transmitting uplink control information (UCI) including information indicating whether to transmit each of a plurality of CG PUSCHs to the base station.

2. The method of claim 1, wherein:

   the information indicating whether to transmit each of a plurality of CG PUSCHs is a bitmap having bits corresponding respectively to a plurality of CG PUSCHs;
   a bit having a first value in the bitmap indicates that the corresponding CG PUSCH is not transmitted; and
   a bit having a second value in the bitmap indicates that the corresponding CG PUSCH is transmitted.

3. The method of claim 1, wherein:

   the UCI including information indicating whether to transmit each of a plurality of CG PUSCHs is transmitted over at least one CG PUSCH; and
   the information indicating whether to transmit each of a plurality of CG PUSCHs indicates usage of successive CG PUSCHs after the at least one CG PUSCH.

4. The method of claim 1, wherein whether to transmit each of a plurality of CG PUSCHs is determined by a medium access control (MAC) entity.

5. A method of a base station in a communication system, the method comprising:

   transmitting configuration information related to an uplink (UL) configured grant (CG) to a terminal; and
   receiving, from the terminal, uplink control information (UCI) including information indicating whether to transmit each of a plurality of CG physical uplink shared channels (PUSCHs) based on the configuration information.

6. The method of claim 5, wherein:

   the information indicating whether to transmit each of the a plurality of CG PUSCHs is a bitmap having bits corresponding respectively to a plurality of CG PUSCHs;
   a bit having a first value in the bitmap indicates that the corresponding CG PUSCH is not transmitted; and
   a bit having a second value in the bitmap indicates that the corresponding CG PUSCH is transmitted.

7. The method of claim 5, wherein:

the UCI including information indicating whether to transmit each of a plurality of CG PUSCHs is received over at least one CG PUSCH; and
the information indicating whether to transmit each of a plurality of CG PUSCHs indicates usage of successive CG PUSCHs after the at least one CG PUSCH.

8. The method of claim 5, wherein whether to transmit each of a plurality of CG PUSCHs is determined by a medium access control (MAC) entity.

9. A terminal in a communication system, comprising:

a transceiver; and
a controller that is configured to receive configuration information related to an uplink (UL) configured grant (CG) from a base station, identify a plurality of CG physical uplink shared channels (PUSCHs) based on the configuration information, determine whether to transmit each of a plurality of CG PUSCHs, and transmit uplink control information (UCI) including information indicating whether to transmit each of a plurality of CG PUSCHs to the base station.

10. The terminal of claim 9, wherein:

the information indicating whether to transmit each of a plurality of CG PUSCHs is a bitmap having bits corresponding respectively to a plurality of CG PUSCHs;
a bit having a first value in the bitmap indicates that the corresponding CG PUSCH is not transmitted; and
a bit having a second value in the bitmap indicates that the corresponding CG PUSCH is transmitted.

11. The terminal of claim 9, wherein:

the UCI including information indicating whether to transmit each of a plurality of CG PUSCHs is transmitted over at least one CG PUSCH; and
the information indicating whether to transmit each of a plurality of CG PUSCHs indicates usage of successive CG PUSCHs after the at least one CG PUSCH.

12. The terminal of claim 9, wherein whether to transmit each of a plurality of CG PUSCHs is determined by a medium access control (MAC) entity.

13. A base station in a communication system, comprising:

a transceiver; and
a controller that is configured to transmit configuration information related to an uplink (UL) configured grant (CG) to a terminal, and receive, from the terminal, uplink control information (UCI) including information indicating whether to transmit each of a plurality of CG physical uplink shared channels (PUSCHs) based on the configuration information.

14. The base station of claim 13, wherein:

the information indicating whether to transmit each of a plurality of CG PUSCHs is a bitmap having bits corresponding respectively to a plurality of CG PUSCHs;
a bit having a first value in the bitmap indicates that the corresponding CG PUSCH is not transmitted; and
a bit having a second value in the bitmap indicates that the corresponding CG PUSCH is transmitted.

15. The base station of claim 13, wherein:

the UCI including information indicating whether to transmit each of a plurality of CG PUSCHs is received over at least one CG PUSCH; and
the information indicating whether to transmit each of a plurality of CG PUSCHs indicates usage of successive CG PUSCHs after the at least one CG PUSCH.

# FIG. 1

Radio frame (114)

Slot (106)

$N_{RB}^{DL}$ subcarriers (104)

$N_{RB}$ subcarriers (110)

Resource element (112)

Resource block (108)

$N_{symb}$ OFDM symbols (102)

# FIG. 2

# FIG. 3

FIG. 4

Frequency

Slot #n
(402)

Slot #n+1
(404)

Slot #n+2
(406)

...

Slot #k
(408)

Time

FIG. 5

EP 4 668 955 A2

m : PDCCH mornitoring occasion
(ordered in ascending order of start time of the search space set)

506
m = 0

508
m = 1

510
m = 2

516

520

502

c = 0

$$V^{DL}_{C-DAI,0,0} = 1$$
$$V^{DL}_{T-DAI,0} = 1$$

$$V^{DL}_{C-DAI,0,1} = 2$$
$$V^{DL}_{T-DAI,1} = 2$$

$$V^{DL}_{C-DAI,0,2} = 3$$
$$V^{DL}_{T-DAI,2} = 4$$

PUCCH

Slot n

t

512

514

504

c = 1

$$V^{DL}_{C-DAI,1,2} = 4$$
$$V^{DL}_{T-DAI,2} = 4$$

t

518

# FIG. 6

# FIG. 7

receive SPS PDSCH higher signal,and receive
DCI indicating SPS PDSCH activation 700

receive SPS PDSCH, and transmit HARQ-ACK 702

receive DCI indicating SPS PDSCH deactivation 704

transmit HARQ-ACK information for DCI 706

FIG. 8

start determining dynamic HARQ-ACK codebook size —~800

calculate number of SPS PDSCHs occurring in each slot, and reflect this in dynamic HARQ-ACK codebook —~802

finish determining dynamic HARQ-ACK codebook size —~804

# FIG. 9

Periodicty

901 — UCI
CG PUSCH
900

CG PUSCH
902

CG PUSCH
904

CG PUSCH
906

Periodicty

Periodicty

911 — UCI
CG PUSCH
910

CG PUSCH
912

CG PUSCH
914

CG PUSCH
916

Time

EP 4 668 955 A2

36

# FIG. 10

EP 4 668 955 A2

PUCCH

1008

1001 — UCI

CG PUSCH

1000

CG PUSCH

1002

CG PUSCH

1004

CG PUSCH

1006

Time

FIG. 11

EP 4 668 955 A2

# FIG. 12

PUCCH ~1200

CG PUSCH ~1202

CG PUSCH ~1204

CG PUSCH ~1206

CG PUSCH ~1208

Time

FIG. 13

```
┌─────────────────────────────────────────────┐
│                                             │
│     receive CG PUSCH activation information  │~─1300
│                                             │
└─────────────────────────────────────────────┘
                      │
                      ▼
┌─────────────────────────────────────────────┐
│  generate information about resources to be used or │
│   unused among CG PUSCH resources, and transmit     │~─1302
│                 the information               │
└─────────────────────────────────────────────┘
                      │
                      ▼
┌─────────────────────────────────────────────┐
│  if CG PUSCH indicated as unused overlaps with PUCCH, │
│  the UE transmits UCI included in PUCCH over PUCCH or  │~─1304
│                    CG PUSCH                   │
└─────────────────────────────────────────────┘
```

FIG. 14

# FIG. 15

base station receiver ~1501

1503 ~ base station processor

base station transmitter ~1505